# EUROPEAN PATENT SPECIFICATION

(11) **EP 2 998 528 B1**
(45) Date of publication and mention of the grant of the patent: **04.11.2020**
(21) Application number: 14794477.1
(22) Date of filing: 25.04.2014
(51) Int. Cl.: F01N 3/01, B01D 50/00, B03C 3/40, B03C 3/41, B03C 3/49, F01N 3/02, F01N 3/037, B03C 3/02, B03C 3/06, F01N 13/00

(54) **EXHAUST GAS TREATMENT DEVICE FOR MARINE DIESEL ENGINE USING FUEL OIL**
ABGASBEHANDLUNGSVORRICHTUNG FÜR EINEN SCHIFFSDIESELMOTOR MIT HEIZÖL
DISPOSITIF DE TRAITEMENT DE GAZ D'ÉCHAPPEMENT POUR MOTEUR DIESEL DE NAVIRE METTANT EN OEUVRE UN PÉTROLE LOURD

(30) Priority: 09.05.2013 JP 2013099603; 29.08.2013 JP 2013178669
(43) Date of publication of application: 23.03.2016
(73) Proprietor: Usui Kokusai Sangyo Kaisha Ltd., Shizuoka 411-8610 (JP)
(72) Inventor: FURUGEN Munekatsu, Nishinomiya-shi Hyogo 662-0875 (JP); MAKINO Tadashi, Takatsuki-shi Osaka 569-1020 (JP); TAKIKAWA Kazunori, Sunto-gun Shizuoka 411-8610 (JP); HAYASHI Koichi, Sunto-gun Shizuoka 411-8610 (JP)
(74) Representative: Hoppe, Lars
(86) International application number: PCT/JP2014/061746
(87) International publication number: WO 2014/181717

(56) References cited:
- EP-A1- 2 131 017
- WO-A1-2004/041412
- WO-A1-2012/066825
- DE-A1- 3 842 001
- GB-A- 2 169 819
- JP-A- S63 221 823
- JP-A- 2005 076 497
- JP-A- 2012 107 556
- JP-B2- H 054 441
- JP-U- H0 195 519
- JP-U- S57 181 358
- US-A1- 2004 025 497

## Description

### Technical Field

The present invention relates to technology of exhaust gas treatment for a large-displacement diesel engine discharging high-temperature exhaust gas and using particularly fuel oil (while fuel oil is represented as Diesel Oil (DO), Marine Diesel Fuel (MDF) or Marine Diesel Oil (MDO), Marine Fuel Oil (MFO), Heavy Fuel Oil (HFO), and Residual Fuel Oil (RFO) in ship industries, these representations are collectively referred to as "fuel oil") and fuel equivalent to or lower than the fuel oil in quality for marine, electric power generation, general industries, and so forth, the treatment for removing particulate matter (hereinafter referred to as "PM") having carbon as a main ingredient and harmful gas contained in exhaust gas of a diesel engine. In more detail, the present invention relates to technology of electric treatment of exhaust gas using corona discharge in a large-displacement diesel engine such as engines for marine, electric power generation, general industries, and so forth.

In the present invention, fuel oil and fuel equivalent to or lower than fuel oil in quality are collectively referred to as fuel oil.

### Background Art

As a motive power source for various marines, electric power generators, large construction machines and, furthermore, various automobiles, and so forth, a diesel engine has been widely adopted. PM contained in exhaust gas discharged from this diesel engine not only cause air pollution as well known but also are substances extremely hazardous to human bodies, and therefore purification of the exhaust gas is extremely important. Thus, many suggestions have already been made such as an improvement of a diesel engine combustion scheme, adoption of various exhaust gas filters, and a method of electrical treatment by using corona discharge, and have been partially put to practical use.

Here, PM (particular matter) components in exhaust gas of a diesel engine is classified into two, that is, soluble organic fractions (SOF, hereinafter referred to as "SOF") and insoluble organic fractions (ISF, hereinafter referred to as "ISF"). Of these, SOF components have unburned ones of fuel and lubrication oil as main components, including harmful substances such as carcinogenic polycyclic aromatics. On the other hand, ISF components have carbon (soot) and sulfate components with low electric resistivity as main components. Due to influences of these SOF components and ISF components on human bodies and environments, exhaust gas are desired to be reduced as much as possible. In particular, the degree of adverse effects of PM on living bodies are particularly problematic when the particle diameter is of a nanometer size.

As a method of electrical treatment utilizing corona discharge, for example, methods and devices described below (Patent Literatures 1 to 6) have been suggested.

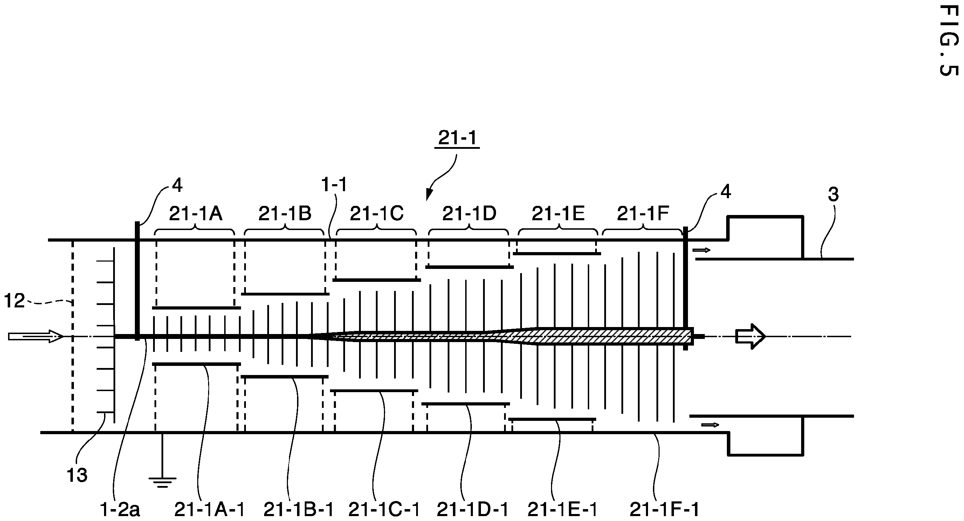

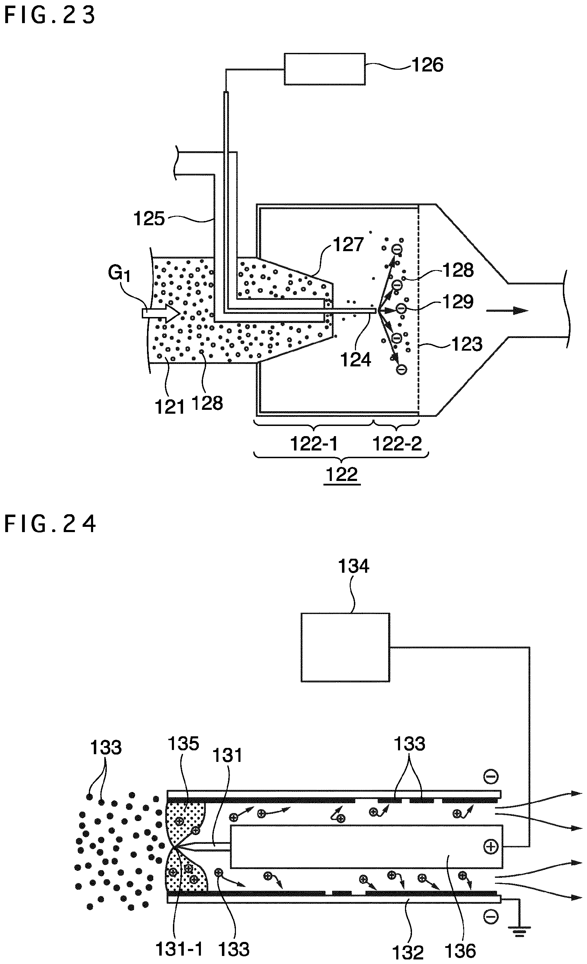

That is, Patent Literature 1 has suggested, as schematically shown in Figure 23, an electrical treatment method and equipment for exhaust gas of a diesel engine, adopting a system where a discharging and charging portion 122 composed of a corona discharging portion 121-1 and a charging section 122-2 is provided in an exhaust gas passage 121, so that electrons 129 corona-discharged is charged to PM 128 mainly composed of carbon in exhaust gas G1 and the charged PM 128 is then collected by a collection plate 123 disposed in the exhaust gas passage 121, and configured such that a length of an electrode needle 124 in the discharging and charging portion 122 is short in a flow direction of an exhaust gas stream, and the collection plate 123 is disposed to be perpendicular to the flow direction of the exhaust gas stream. In Figure 5, reference sign 125 denotes a seal gas pipe, 126 denotes a high-voltage power source apparatus, and 127 denotes an exhaust gas guide pipe.

Patent Literature 2 has suggested, as schematically shown in Figure 24, an exhaust gas PM-collecting equipment for a diesel engine, comprising a needle electrode 131 for causing corona discharge 135 around a needle tip 131-1 to charge PM 133 in exhaust gas, a collecting electrode 132 for collecting charged PM 133, and a high-voltage direct-current power source 134 for applying a predetermined direct-current high voltage between the needle electrode 131 and the collecting electrode 132. In Figure 24, reference sign 136 denotes a deflection electrode.

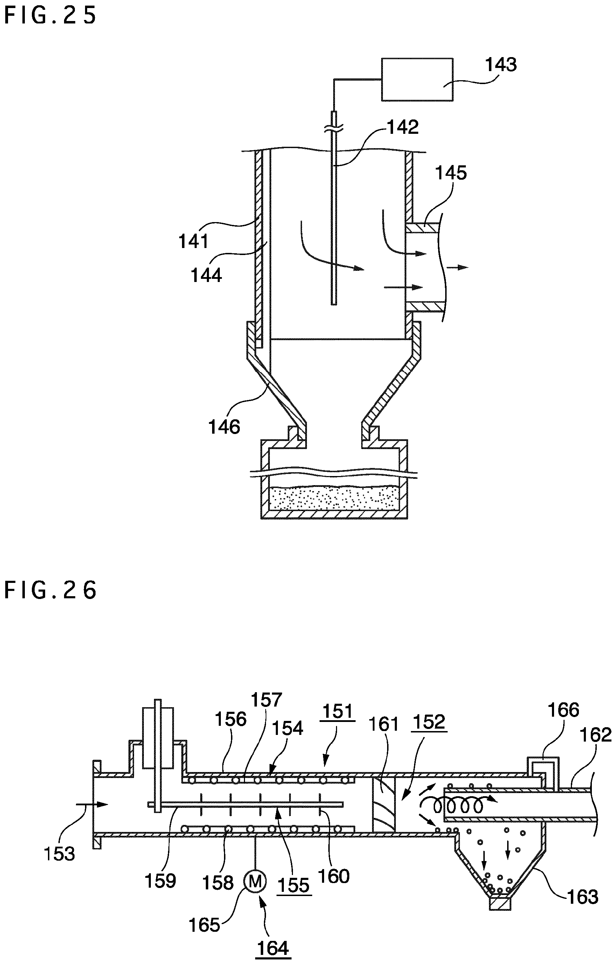

Patent Literature 3 has suggested, as schematically shown in Figure 25, an exhaust gas purifying equipment, comprising a fixed cylinder 141 constituting one of a pair of collecting electrodes for PM collection provided in an exhaust gas route, an electrode rod 142 provided to extend at a central portion of the fixed cylinder 141 in an axial direction to constitute the other of the pair of collecting electrodes, a high-voltage power source 143 for forming electrostatic field between the pair of collecting electrodes to accumulate PM in exhaust gas on an inner face of the fixed cylinder 141, and a scrapping-off portion 144 rotating relative to the fixed cylinder along the inner face of the fixed cylinder 141 to scrap off the PM accumulated on the inner face of the fixed cylinder. In Figure 25, reference sign 145 denotes an exhaust gas pipe, and 146 denotes a rotational cylindrical portion.

Patent Literature 4 has suggested a diesel engine exhaust gas purifying device, including an electrical precipitation means having an electrode for charging PM contained in exhaust gas of an diesel engine and a precipitation electrode for collecting the charged PM, a means for detaching the PM retained after the collection by the precipitation electrode from the precipitation electrode, and a separation and collection means of a cyclone system for separating PM detached from the collecting electrode to collect the same.

This device is configured, as exemplarily shown in Figure 26, so as to perform treatment while causing exhaust gas to flow in a lateral direction and to include an electrical precipitation part 151 for collecting PM and a cyclone 156 serving as a separating and collecting member, the electrical precipitation part 151 including: a precipitation electrode 154 composed of a cylindrical metal body 157 attached to an inner circumferential face of a cylindrical housing 156 and a concavo-convex portion 158 formed on an inner circumferential face of the cylindrical metal body; a main electrode 159 extending along an axial line of the precipitation electrode 154; and a discharge electrode 155 composed of a group of electrode needles 160 projecting radially and arranged at predetermined intervals in a longitudinal direction of the main electrode 159, the cyclone 152 being placed in a region downstream of a guide vane 161 that converts a flow of gas 153 passed through the electrical precipitation part 151 into a swirl flow, and an exhaust gas pipe 162 for exhausting gas in the cyclone and a hopper 163 for collecting centrifuged PM are provided downstream of the cyclone 152. Reference sign 164 denotes a detaching mechanism for detaching PM retained after collection by the precipitation electrode 154 from the precipitation electrode, which is constituted of an eccentric motor 165 generating vibrations due to eccentricity, for example. Reference sign 166 denotes a gas extracting pipe for causing exhaust gas in the exhaust gas pipe 162 to return to an upper space above the hopper 163.

That is, according to the exhaust gas purifying device, PM contained in exhaust gas flown into the electrical precipitation part 151 is charged by discharge performed between the precipitation electrode 154 and the discharge electrode 155 and is collected in the precipitation electrode 154 owing to Coulomb's force, the collected PM flows into the guide vane 161 together with a gas flow and is then centrifuged by the cyclone 152 that is arranged downstream of the cyclone 161, so that the centrifuged PM drops within the hopper 163 to be collected therein, while the purified gas is discharged outside via the exhaust gas pipe 162.

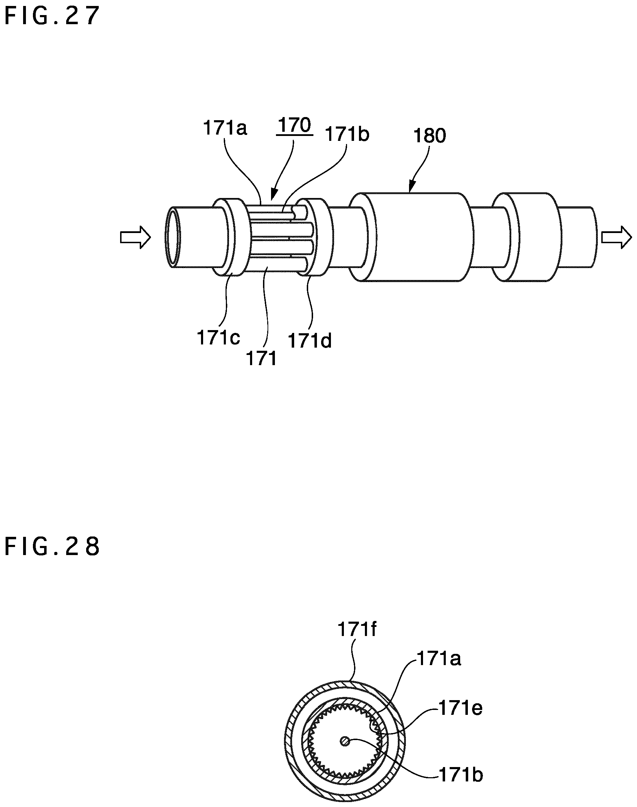

Patent Literature 5 has proposed a gas treatment equipment comprising a charging and agglomerating part for charging and agglomerating, by corona discharge, target components to be collected in exhaust gas of a diesel engine mounted on an automobile, and a filter part for collecting the agglomerated components. As shown in Figures. 27 and 28, the gas treatment equipment has a configuration wherein : the charging and agglomerating part 170 is disposed upstream and the filter 180 is disposed downstream; a gas passage wall of the charging and agglomerating part 170 is formed of tubular bodies 171, 171a, etc.; and a precipitation electrode, which is a low-voltage electrode, is formed of a conductive cylinder 171f disposed in the vicinity of the surface of the gas passage wall; corona electrodes are formed of wire-like high-voltage electrodes disposed inside these tubular bodies, and the tubular body of the gas passage wall is formed as a gas cooling part where natural convection and heat radiation cool gas naturally; and further a turbulence promoting means 171e for promoting disturbance of a gas stream passing in the vicinity of an inner surface of the tubular body of the gas passage wall or the conductive tubular body is disposed on the surface of the tubular body or in the vicinity of the surface thereof. In the figure, reference sign 171c denotes a gas inlet chamber, 171b denotes a corona electrode, and 171d denotes a gas outlet chamber.

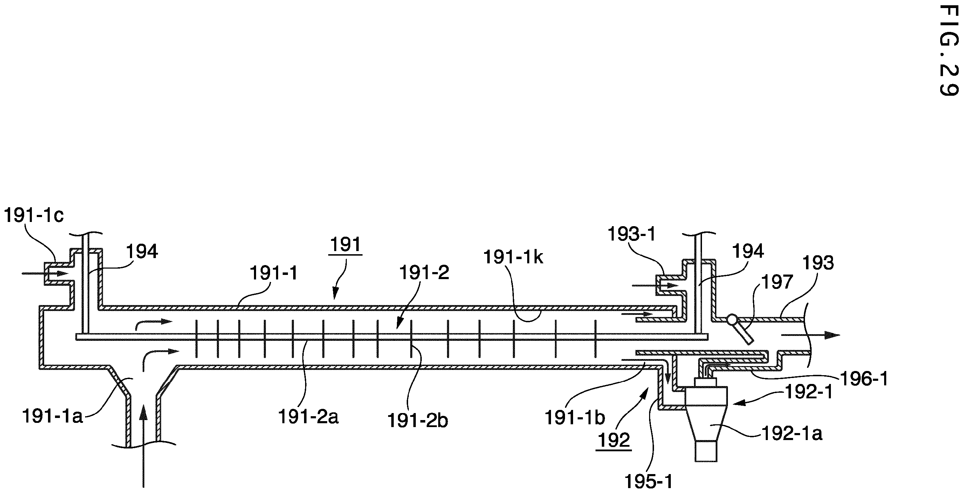

A diesel engine exhaust gas treatment equipment using fuel equivalent to or lower than fuel oil in quality described in Patent Literature 6 is roughly formed of a tubular collecting unit 191 constituting an electrical precipitation means and a separating and collecting unit 192 constituting a separation and collection means, as in an example of configuration depicted in Figure 29. The tubular collecting unit 191 provided to collect PM particulates includes a predetermined length of a collecting pipe 191-1, that constitute a precipitation electrode and has a collecting wall face 191-1k, and a discharge electrode 191-2 which electrically charges PM contained in exhaust gas. The collecting pipe 191-1 constituting the precipitation electrode has an exhaust gas inlet port 191-1a at an end part on an upstream side (on diesel engine side), and has a PM low-concentration exhaust gas delivery pipe 193 consecutively connected near an axial center of an end part on a downstream side and a PM high-concentration exhaust gas delivery portion 191-1b consecutively connected near an inner circumferential surface of the end part on the downstream side. The discharge electrode 191-2 is configured of a main electrode 191-2a extending over an approximately full length near the axial center of the collecting pipe 191-1 configuring the precipitation electrode and a group of electrode probes 191-2b disposed with a desired space in a longitudinal direction of the main electrode 191-2a to radially protrude. The above-configured discharge electrode 191-2 has both end portions of the main electrode 191-2a supported via a seal-air inlet pipe 191-1c provided on an exhaust gas inlet port 191-1a side of the collecting pipe 191-1 and a support 194 vertically provided to a seal-air inlet pipe 193-1 provided at an entrance portion of the PM low-concentration exhaust gas delivery pipe 193.

Note that, although not depicted, the discharge electrode 191-2 is supported by a stay insulated from the inside of the collecting pipe 191-1 as required so as to have a desired space. Also, the discharge electrode 191-2 is wired to a high-voltage power supply device (not depicted) installed outside to receive supply of controlled high-voltage power supply.

The separating and collecting unit 192 provided on a downstream side of the tubular collecting unit 191 in a flowing direction of the exhaust gas is configured of cyclone collecting means 192-1 as separate means. This cyclone collecting means 192-1 is configured of one tangential cyclone 192-1a connected via a communication pipe 195-1 to the PM high-concentration exhaust gas delivery portion 191-1b of the collecting pipe 191-1. Furthermore, between the tangential cyclone 192-1a and the PM low-concentration exhaust gas delivery pipe 193, an exhaust pipe 196-1 is disposed for merging purified gas after passing through the tangential cyclone 192-1a into low-concentration exhaust gas flowing in the PM low-concentration exhaust gas delivery pipe 193. Also, the PM low-concentration exhaust gas delivery pipe 193 is provided with a flow-rate control dumper 197 for flow-rate adjustment of a PM high-concentration exhaust gas inflow amount and inflow velocity to the tangential cyclone 192-1a and a low-concentration exhaust gas discharge amount.

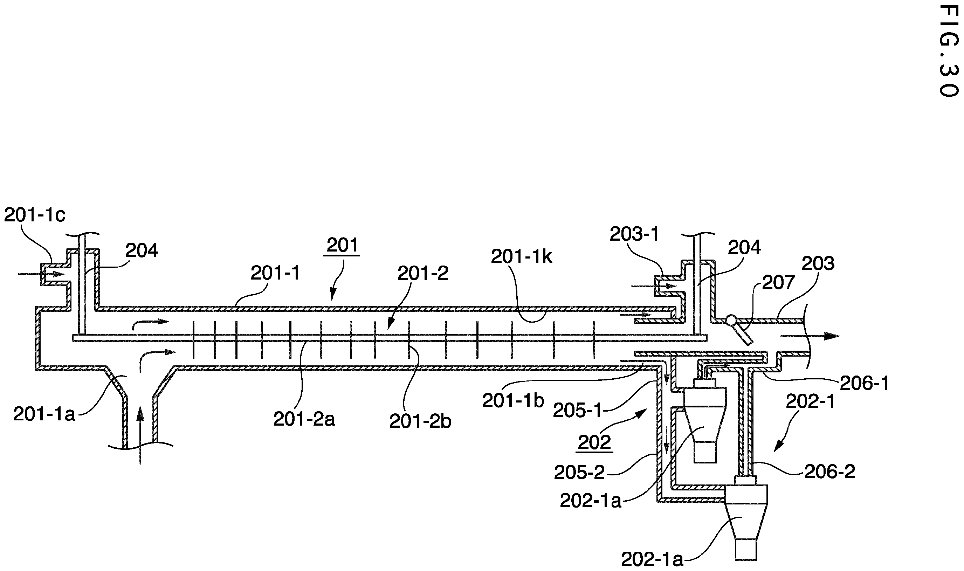

Also, a diesel engine exhaust gas treatment equipment depicted in Figure 30 as another example of structure of the diesel engine exhaust gas treatment equipment using fuel equivalent to or lower than fuel oil in quality has a structure similar to that of the exhaust gas treatment equipment depicted in Figure 29 mentioned above, except that cyclone collecting means 202-1 is configured of two tangential cyclones 202-1a. To a PM high-concentration exhaust gas delivery portion 201-1b of a collecting pipe 201-1, the two tangential cyclones 202-1a are connected in parallel via communicating pipes 205-1 and 205-2 to configure the cyclone collecting means 202-1. Also in this case, exhaust pipes 206-1 and 206-2 are disposed for merging purified gas after passing through each tangential cyclone 202-1a into low-concentration exhaust gas flowing in a low-concentration exhaust gas delivery pipe 203.

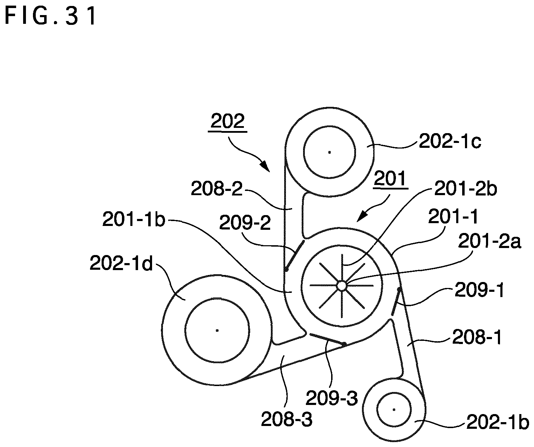

The cyclone collecting means 202-1 is configured of a plurality of tangential cyclones with different processing capacities, for example, as depicted in Figure 31, cyclones of three types: a small-processing-capacity tangential cyclone 202-1b, an intermediate-processing-capacity tangential cyclone 202-1c, and a large-processing-capacity tangential cyclone 202-1d. The structure is such that the respective tangential cyclones 202-1b, 202-1c, and 202-1d are connected via communicating pipes 208-1, 208-2, and 208-3 connected at radial positions to the PM high-concentration exhaust gas delivery portion 201-1b of the collecting pipe 201-1 and flow-rate control dumpers 209-1, 209-2, and 209-3 are provided at a PM high-concentration exhaust gas inlet port of each of the communicating pipes 208-1, 208-2, and 208-3.

When the cyclone collecting means is configured of a plurality of tangential cyclones with different processing capacities in this manner, each tangential cyclone can be more adequately selected for use in accordance with the flow rate of exhaust gas, which changes with change in operation status associated with parallel operation or single operation of a main machine and a sub machine in a marine engine and the load factor of the engine. Not only that, by controlling the flow-rate control dumber 209-1, 209-2, and 209-3 provided for the respective tangential cyclones together with a dumber disposed in the PM low-concentration exhaust gas delivery pipe 203, inflow tangential velocity of exhaust gas to each tangential cyclone can be more adequately controlled, thereby ensuring and maintaining high collection efficiency in a wide range of engine load factors and the like.

WO 2004/041412 A1 discloses to divide the exhaust gas flow into two or more gas flows which are ionized separatly and cleaned from particles together or separately in a cyclone system. Corona discharge electrodes are provided having a decreasing diameter in the downstream direction of the gas flow.

### Citation List

### Patent Literature

PTL 1: WO2006/064805B
PTL 2: Japanese Patent Application Laid-Open No. H09-112246
PTL 3: Japanese Patent Application Laid-Open No. H06-173637
PTL 4: Japanese Patent Application Laid-Open No. 2006-136766
PTL 5: Japanese Patent No. 4529013
PTL 6: Japanese Patent Application Laid-Open No. 2012-107556

### Summary of Invention

### Technical Problem

However, the conventional diesel engine exhaust gas purifying equipments for electrically treating PM in exhaust gas by using corona discharge or the like described above have the following problems.

Specifically, the electrical treatment method and equipment for exhaust gas of a diesel engine described in Patent Literature 1 has problems as follows: high flow resistance (pressure loss) due to the configuration in which the length of the electrode needle 124 in the discharging and charging part 122 is short in the flowing direction of the exhaust gas stream and the collection plate 123 is so disposed as to be perpendicular to the flowing direction of the exhaust gas stream, and in which the exhaust gas stream directly hits the collection plate 123; a possibility that since the collection plate 123 is thin and short in length in the flowing direction of the exhaust gas stream, the PM might pass through the collection plate 123 and the PM collection efficiency thus could not sufficiently be increased; and that once the PM passes through the collection plate 123, the PM may not be charged by corona discharge or collected again, and may be exhausted as it is.

Note that Patent Literature 1 mentioned above neither discloses nor suggests not only a technical idea that the collection plate is formed in a tubular shape lengthened in the flow direction of the exhaust gas and an electrode needle is provided in a tube-axial direction of the tubular collecting part, where a jumping phenomenon repeating accumulation and detachment of PM particulates while causing the PM particulates to flow in the flow direction of the exhaust gas flow is developed and growth of the PM particulates is caused so that according to the growth phenomenon, particle diameters of the PM in the exhaust gas flow in the vicinity of an inner face of the tubular collecting part are coarsened such that the PM particulates are easily collected by the cyclone and the concentration of the PM is increased, and an exhaust gas flow where the particle diameters of PM are large diameters and the concentration of the PM has been condensed to a high level is selectively extracted and collected by the cyclone, but also a technical idea that the tubular collecting part formed of the discharge electrode and the precipitation electrode has a short dimension in the axial direction and a plurality of tubular collecting modules with different diameters are combined in the axial direction to subject all exhaust gas flows to reliable corona discharge.

Moreover, the exhaust gas PM-collecting equipment described in Patent Literature 2 and the exhaust gas purifying equipment described in Patent Literature 3 also have the following defects: since the discharge voltage and the collecting deflection voltage are the same potential, it is difficult to set both the voltages to proper conditions thereof; since a spacing between the deflection electrode and the collecting electrode must be made large in order to prevent spark generation therebetween; PM bypassing a collecting portion without being collected increases due to the setting of the spacing, which results in lowering of a collection efficiency; and since it is necessary to take the capacity of the collecting portion large in order to increase the collecting efficiency, the equipment must be size-enlarged, which is improper as a marine part desired for size reduction and weight reduction, and the like.

Further, Patent Literature 2 describes that the collecting electrode 132 is a tunnel-shaped electrode serving as an exhaust passage, an electrode assembly of the needle electrode 131 and the deflection electrode 136 is disposed within the tunnel of the collecting electrode 132 such that an axial center thereof is approximately coincident with an axial center of the tunnel, and the electrode assembly which is thick and elongated is inserted into the tubular collecting part over an approximately entire length to be formed in a grid shape. Also, Patent Literature 3 describes "... the electrode rod 142 configuring one of each of the paired discharge electrodes and the paired collecting electrodes is vertically provided along the center line of the fixed cylindrical body 141, ... a large-diameter exhaust port is provided on a lower side surface of the fixed cylindrical body 141, the downstream-side exhaust pipe 145 fits in the exhaust port ...", "the rotating cylindrical unit 146 has a truncated cone shape with a small-diameter lower part, ... the long bar (scraping unit) 144 is provided to stand upward from the inner surface of the rotating cylindrical unit 146, and the outer edge of the bar 144 makes contact with the inner surface of a large-diameter part of the fixed cylindrical body 141", "... diesel particulate ... diesel particulate electrically charged ... by corona discharge in a discharge space between ... the electrode rod 142 and the fixed cylindrical body 141 is led to an electrostatic field to be deposited on the inner surface of the large-diameter part of the fixed cylindrical body 141" and, furthermore, "with the rotation of the rotating cylindrical unit 146, the bar 144 rotates at low speed in contact with the inner surface of the large-diameter part of the fixed cylindrical body 141 to cause a diesel particulate layer deposited on the inner surface of the large-diameter part to fall off, ... the falling-off diesel particulate can be gathered in a collection box ... and can be removed". According to these descriptions, a tubular collecting part is formed, however, Patent Literature 3 provides a technique where the collecting electrode is constituted as a fixed cylindrical portion (tubular) elongated in a flow direction of an exhaust gas flow and electrode needles are provided with intervals in a tube-axial direction of the tubular collecting part, PM is accumulated while being caused to flow in the flow direction of the exhaust gas flow, and the accumulated PM particulates are scraped off by the bar, which technique is largely apprehended that PM particulates scattered at a scraping-off time are partially exhausted through a downstream side exhaust gas pipe fitted in a large-diameter exhaust gas port provided in front of the collecting box.

Therefore, as is the case with Patent Literature 1, Patent Literatures 2 and 3 neither disclose nor suggest not only a technical idea that the collection plate is formed in a tubular shape lengthened in the flow direction of the exhaust gas flow and an electrode needle is provided in a tube-axial direction of the tubular collecting part, where a jumping phenomenon repeating accumulation and detachment of PM particulates while causing the PM particulates to flow in the flow direction of the exhaust gas flow is developed and growth of the PM particulates is caused so that according to the growth phenomenon, particulate diameters of the PM in the exhaust gas flow in the vicinity of an inner face of the tubular collecting part are coarsened so as to collect the PM particulates by the cyclone easily and the concentration of the PM is increased, and an exhaust gas flow where the particulate diameters of PM are large diameters and the concentration of the PM has been condensed to a high level is selectively extracted and collected efficiently by the cyclone, but also a technical idea that the tubular collecting part formed of the discharge electrode and the precipitation electrode has a short dimension in the axial direction and a plurality of tubular collecting modules with different diameters are combined in the axial direction to subject all exhaust gas flows to reliable corona discharge.

As for the exhaust gas purifying equipment for a diesel engine described in Patent Literature 4, it employs a system where PM particulates collected on the precipitation electrode 154 and the inner circumferential (collecting pipe wall) of the cylindrical housing 156 in the electrical precipitation part 151 form large masses, the PM masses are detached from the precipitation electrode 154 and the collecting pipe wall due to natural delamination or by a mechanical detaching mechanism and are mixed in the cylindrical housing 156, and the PM masses detached and mixed are centrifuged from exhaust gas in the cyclone 152 to be re-collected into the hopper 163. This system has the following defects: since a whole amount of exhaust gas is caused to flow in the cyclone 152 through the guide vane 161 arranged in the cylindrical housing 156 and accompanied by mixing of the whole amount of the exhaust gas to centrifuge PM, a large-sized cyclone 152 having a large-sized guide vane 161 disposed therein is required necessarily, which results in increase of an installation cost and a running cost; since a plurality of cyclones 152 cannot be installed structurally, a large-scale increase/decrease of the exhaust gas flow rate due to an increase or decrease of the number of operating engines and large fluctuation of the load factor of the engine cannot be accommodated; and since a means for controlling an exhaust gas flow rate at the cyclone introduction portion properly is not provided, such a problem as deterioration of a fuel consumption due to excessive pressure loss in the cyclone cannot be solved while a high PM collecting efficiency is being maintained.

Additionally, in Patent Literature 4, the collection plate is formed in a tubular shape elongated in the flow direction of the exhaust gas flow and the electrode needle is provided in the tube-axial direction of the tubular collecting part, so that PM particulates are accumulated in the vicinity of the inner face of the tubular collecting part while being caused to flow in the flow direction of the exhaust gas flow and they are collected by the cyclone, however, Patent Literature 4 neither discloses nor suggests not only a technical idea that particulate diameters of the PM in the exhaust gas flow are coarsened so as to collect the MP particulates by the cyclone easily, the concentration of the PM in the exhaust gas flow in the vicinity of the inner face of the tubular collecting part is increased, and only a flow in the vicinity of the inner face of the tubular collecting part in an exhaust gas flow where the particulate diameters of PM are large diameters and the concentration of the PM has been condensed to a high level is selectively extracted and collected by the cyclone in a centralized manner, but also the technical idea that the tubular collecting part formed of the discharge electrode and the precipitation electrode has a short dimension in the axial direction and a plurality of tubular collecting modules with different diameters are combined in the axial direction to subject all exhaust gas flows to reliable corona discharge, as is the cases with Patent Literatures 1 to 3.

The gas treatment equipment described in Patent Literature 5 is a small-sized gas treatment equipment for vehicle mounting and has such a configuration that the charging and agglomerating part 170 and the filter 180 are respectively arranged on the upstream side and on the downstream side, a gas inlet chamber 171c for dividing exhaust gas to many branch flows is provided in the charging and agglomerating part 170, and the cylinder 171f forms a gas passage wall and is exposed to external air so that the cylinder 171f serving as the gas passage wall is formed as a gas cooling portion for cooling gas according to natural convention and natural heat dissipation based upon thermal radiation, and divided exhaust gases are then re-mixed in the gas outlet chamber 171d. This technique is different from a technique in which exhaust gases flowing out from the tubular collecting part is not re-mixed prior to a collecting step of PM particulates (namely the present invention, which will be described further below). The gas treatment equipment described in Patent Literature 5 has such a defect that a turbulence promoting means 171e to a gas flow is provided on an inner surface of the cylinder 171f or in the vicinity of the inner surface, so that turbulence of gas is particularly facilitated in the vicinity of the surface of the cylinder, which results in enlargement of fanning action in a sectional direction of a flow passage.

In addition, Patent Literature 5 provides the equipment that is configured such that the collecting wall is formed as the tubular cylinder elongated in the flow direction of the exhaust gas flow and the electrode needle is provided in the tube-axial direction of the tubular collecting part so that while PM particulates are caused to flow in the flow direction of the exhaust gas flow, they are accumulated and collected in the vicinity of the inner face of the tubular collecting part. However, Patent Literature 5 neither discloses nor suggests not only a technical idea that particulate diameters of the PM in the exhaust gas flow are coarsened so as to collect the PM particulates by the cyclone installed on the downstream side easily and the concentration of the PM in the exhaust gas flow in the vicinity of the inner face of the tubular collecting part is increased, and only a flow of an exhaust gas flow in the vicinity of the inner face of the tubular collecting part where the particulate diameters of PM are large diameters and the concentration of the PM has been condensed to a high level is selectively extracted and collected by the cyclone in a centralized manner, but also the technical idea that the tubular collecting part formed of the discharge electrode and the precipitation electrode has a short dimension in the axial direction and a plurality of tubular collecting modules with different diameters are combined in the axial direction to subject all exhaust gas flows to reliable corona discharge, as is the cases with Patent Literatures 1 to 4.

Still further, any of main parts of the tubular collecting units 191 and 201 configuring the electric precipitation means of the gas treatment equipment described in Patent Literature 6 has a single tubular structure with its diameter approximately constant, the technical idea is neither disclosed nor suggested that the tubular collecting unit formed of the discharge electrode and the precipitation electrode has a short dimension in the axial direction and many (a plurality of stages of) tubular collecting modules with different diameters are combined in the axial direction to subject the entire exhaust gas flow to reliable corona discharge.

The present invention has been made to solve the drawbacks of the conventional arts described above, and is to provide a diesel engine exhaust gas treatment equipment in which a plurality of tubular collecting modules are arranged particularly in a passage where an entire exhaust gas amount flows, the tubular collecting modules being formed of a discharge electrode and a collecting pipe and having different diameters sequentially varied; by always letting any exhaust gas flow flowing at a different radial position pass through any of the tubular collecting modules, corona discharge is reliably performed for adequate electric charge; PM collection is reliably made to a collecting electrode to form PM aggregation; by repeating attachment and falling off, larger and heavier PM aggregation is made; collection by a subsequent cyclone or collision-type inertial-force particle separator is ensured to further improve a degree of exhaust gas purification; and a large increase or decrease of the exhaust gas flow rate due to change in operation status associated with parallel operation or single operation of a main machine and a sub machine in a marine diesel engine using particularly fuel oil and large fluctuations in load factor of the engine, or the like can also be supported.

### Solution to Problems

An exhaust gas treatment equipment for a marine diesel engine using fuel oil according to the present invention includes: an electric precipitation means having a tubular collecting unit, the tubular collecting unit including a combination of collecting modules, each having a discharge electrode for charging particulate matter contained in exhaust gas of a diesel engine using fuel oil and a tubular precipitation electrode for collecting the particulate matter charged, the discharge electrode having a main electrode disposed in the tubular collecting unit in a tube axial direction and a plurality of electrodes arranged at intervals on the main electrode and projecting radially; a separating and collecting means for separating, collecting and precipitating the particulate matter detached from the tubular collecting unit, separately from the electric precipitation means; an exhaust gas delivery pipe for exhaust gases with a low concentration of particulate matter provided near an axial center of the tubular collecting unit on a downstream side thereof; and an exhaust gas delivery portion for exhaust gases with a high concentration of particulate matter provided near an inner circumferential surface of the tubular collecting unit on the downstream side thereof and connected to the separating and collecting means for collecting and precipitating the particulate matter, characterized in that on a upstream side in the tubular collecting unit including a main collecting pipe that has the precipitation electrode and the discharge electrode therein and has a predetermined length and a constant diameter, tubular collecting modules of said collecting modules are arranged in combination in the main collecting pipe in the tube axial direction, each of the tubular collecting modules having the discharge electrode with a different diameter arranged and the tubular precipitation electrode with a diameter smaller than the main collecting pipe, in that on the downstream in the tubular collecting unit, a collecting module of said collecting modules including the discharge electrode and the main collecting pipe is disposed, and in that in the tubular collecting unit, a tubular collecting module with a smallest diameter disposed on an exhaust gas upstream side and another tubular collecting module with a larger diameter sequentially disposed toward downstream.

Also, in the exhaust gas treatment equipment of the present invention, inventive modes are as follows: the tubular collecting unit is configured by disposing a tubular collecting module with a smallest diameter on an upstream side of exhaust gas and sequentially disposing a tubular collecting module with a larger diameter toward downstream; the discharge electrode is disposed in a space between the main collecting pipe and the tubular collecting module to configure the tubular collecting module; and a plurality of the tubular collecting modules having the discharge electrodes and the precipitation electrodes are disposed in a space between the main collecting pipe and the tubular collecting modules. As another preferable mode, provided is an exhaust gas treatment equipment for a marine diesel engine using fuel oil, the equipment comprising: an electric precipitation means having a tubular collecting unit, the tubular collecting unit including a combination of collecting modules, each having a discharge electrode for charging particulate matter contained in exhaust gas of a diesel engine using fuel oil and a tubular precipitation electrode for collecting the particulate matter charged, the discharge electrode having a main electrode disposed in the tubular collecting unit in a tube axial direction and a plurality of electrodes arranged at intervals on the main electrode and projecting radially; a separating and collecting means for separating, collecting and precipitating the particulate matter detached from the tubular collecting unit; an exhaust gas delivery pipe for a low-concentration of the particulate matter provided near an axial center of the tubular collecting unit on a downstream side thereof; and an exhaust gas delivery portion for a high-concentration of the particulate matter provided near an inner circumferential surface of the tubular collecting unit on the downstream side thereof and connected to the precipitation means for collecting the particulate matter, wherein on a upstream side in the tubular collecting unit including a main collecting pipe that has the precipitation electrode and the discharge electrode therein and has a predetermined length and a diameter-enlarged area, tubular collecting modules of said collecting modules are arranged in combination in the main collecting pipe in the tube axial direction, each of the tubular collecting modules having the discharge electrode with a short dimension in an axial direction and a different diameter arranged and the tubular precipitation electrode with a short dimension in an axial direction and a diameter smaller than the main collecting pipe, and on the downstream in the tubular collecting unit, a collecting module of said collecting modules including the discharge electrode and the main collecting pipe is disposed. As another preferable mode, provided is also an exhaust gas treatment equipment for a marine diesel engine using fuel oil, the equipment comprising: an electric precipitation means having a tubular collecting unit, the tubular collecting unit including a combination of collecting modules, each having a discharge electrode for charging particulate matter contained in exhaust gas of a diesel engine using fuel oil and a tubular precipitation electrode for collecting the particulate matter charged, the discharge electrode having a main electrode disposed in the tubular collecting unit in a tube axial direction and a plurality of electrodes arranged at intervals on the main electrode and projecting radially; a separating and collecting means for separating, collecting and precipitating the particulate matter detached from the tubular collecting unit; an exhaust gas delivery pipe for a low-concentration of the particulate matter provided near an axial center of the tubular collecting unit on a downstream side thereof; and an exhaust gas delivery portion for a high-concentration of the particulate matter provided near an inner circumferential surface of the tubular collecting unit on the downstream side thereof and connected to the precipitation means for collecting the particulate matter, wherein on a upstream side in the tubular collecting unit including a main collecting pipe that has the precipitation electrode and the discharge electrode therein and has a predetermined length and sequentially-enlarged diameters toward a downstream side of exhaust gas, tubular collecting modules of said collecting modules are arranged in combination in the main collecting pipe in the tube axial direction, each of the tubular collecting modules having the discharge electrode with a short dimension in an axial direction and a different diameter arranged and the tubular precipitation electrode with a short dimension in an axial direction and a diameter smaller than the main collecting pipe, and on the downstream in the tubular collecting unit, a collecting module of said collecting modules including the discharge electrode and the main collecting pipe is disposed. Further preferable modes are as follows: when the equipment includes a tubular collecting module on an exhaust gas downstream side adjacent to a tubular collecting module on an exhaust gas upstream side and having a diameter larger than the tubular collecting module on the exhaust gas upstream side, a discharge electrode of the tubular collecting module on the exhaust gas downstream side has an arranged outer diameter equal to or smaller than an inner diameter of a precipitation electrode of the tubular collecting module on the exhaust gas upstream side; when the equipment includes a tubular collecting module on an exhaust gas downstream side adjacent to a tubular collecting module on an exhaust gas upstream side and having a diameter larger than the tubular collecting module on the exhaust gas upstream side and a discharge electrode of the tubular collecting module on the exhaust gas downstream side has an arranged outer diameter equal to or smaller than an inner diameter of a precipitation electrode of the tubular collecting module on the exhaust gas upstream side, a diameter transition part where the arranged outer diameter of the discharge electrode sequentially enlarges is provided between the discharge electrodes of the tubular collecting modules on the exhaust gas upstream side or on the exhaust gas downstream side; a recirculation pipe which causes purified gas after passing through the separating and collecting means to reflux is provided between the diesel engine and the tubular collecting unit, and kinetic energy imparting means to the exhaust gas refluxing in the recirculation pipe is provided; the precipitation electrode includes a collecting wall that is formed of: a cylindrical wall surface with annular-shaped or spiral-shaped projections and/or recesses by forming a plate with asperities such as a wave plate into a cylindrical shape; or a cylindrical wall surface with a mesh through holes on a peripheral edge thereof by forming a plate with mesh through holes and asperities in a thickness direction on a peripheral edge of the through holes such as expand metal into a cylindrical shape; a bell mouth is provided at an upstream end of a collecting pipe that corresponds to the tubular precipitation electrode of each of the tubular collecting modules disposed in the main collecting pipe, and a tapered and diameter-enlarged portion is provided at a downstream end thereof; a cylindrical sub collecting pipe with many through holes is provided to an inner wall of the collecting pipe that corresponds to the tubular precipitation electrode of each of the tubular collecting modules disposed in the main collecting pipe, in a state of being electrically conductive with the collecting pipe (main collecting pipe); and furthermore, many through holes are provided to a wall of the collecting pipe that corresponds to the tubular precipitation electrode of each of the tubular collecting modules disposed in the main collecting pipe.

Also, in the present invention, as a preferable mode, the discharge electrode is configured of the main electrode disposed in the tubular collecting unit in the tube axial direction and saw-blade-shaped discharge plates having an angle on the order of 20 degrees and assuming a substantially isosceles triangle, the saw-blade-shaped discharge plates being spaced and disposed to the main electrode, the saw-blade-shaped discharge plates are disposed with a desired space in an axial direction of the main electrode to configure a saw-blade-shaped discharge electrode group, and a plurality of said saw-blade-shaped discharge electrode groups are radially disposed in a circumferential direction of the main electrode. Furthermore, as a preferable mode, the discharge electrode is configured of a saw-blade-shaped discharge electrode plate in which a saw-blade-shaped discharge plate part is integrally provided with a substrate unit extending in an axial direction of the main electrode, the saw-blade-shaped discharge electrode plate is provided to protrude along a axial direction of the main electrode via the substrate unit, and a plurality of said saw-blade-shaped discharge electrode plates are radially disposed in the circumferential direction of the main electrode. Still further, as a preferable mode, between the saw-blade-shaped discharge electrode groups or the saw-blade-shaped discharge electrode plates disposed in the axial direction and the circumferential direction of the main electrode, at least one band-shaped straightening vane having a diameter smaller than an arranged outer diameter of the saw-blade-shaped discharge electrode groups or the saw-blade-shaped discharge electrode plate is radially disposed along an axial direction of the main electrode. Still further, in the present invention, as a preferable mode, a stay which fixes the tubular collecting unit of each of the tubular collecting modules disposed in the main collecting pipe to a main collecting pipe is a plate-shaped long member extending in the tube axial direction, and a plurality of said plate-shaped stays formed of the long member are arranged in a circumferential direction.

### Advantageous Effects of Invention

In the exhaust gas treatment equipment for a marine diesel engine using fuel oil according to the present invention, PM in exhaust gas is collected on the tubular collecting wall surface in the tubular collecting unit to make PM aggregation. With the aggregated PM repeatedly attached to and falling off from the tubular collecting wall surface, PM near the tubular collecting wall surface is gradually condensed. Thus, an exhaust gas flow containing PM at high concentration flows downstream. With PM gradually diluted near the axial center of the tubular collecting unit, PM high-concentration exhaust gas separated from low-concentration exhaust gas containing PM only at low concentration can be diverted from the high-concentration discharging unit near the tubular collecting wall surface to an inlet to the tangential cyclone or collision-type inertial-force particle separator to be guided to the collecting unit formed of the tangential cyclone or collision-type inertial-force particle separator. That is, most of PM particles can be collected by this tubular collecting unit. In addition to the above-described basic operation and effect, excellent operations and effects described below can be achieved.
(1). A discharge electrode and a precipitation electrode are made to have a short dimension in an axial direction and are concentrically combined to form one tubular collecting module. This tubular module with a smallest diameter is provided to an exhaust gas uppermost stream and one with a largest diameter is provided at the last stage. The plurality of tubular collecting modules (two sets of modules at least) are sequentially arranged along the flowing direction of the exhaust gas with their diameters increased. With this, by always letting any exhaust gas flow flowing at a different radial direction pass through any of the tubular collecting modules, corona discharge is reliably performed by the discharge electrode of that tubular collecting module at the time of passing through that tubular collecting module. Also, the particles are always deposited once to the precipitation electrode of that tubular collecting module, and passes while repeating deposition and falling off. This is repeated in accordance with the number of arranged stages of the tubular collecting modules. Thus, for example, when five stages of tubular collecting modules are installed, most of PM particles contained in the exhaust gas flow flowing near the center are subjected to corona discharge five times, an exhaust gas flow flowing outside thereof is subjected to corona discharge four times, and an exhaust gas flow flowing outside thereof is subjected to corona discharge three times. In this manner, while the number of times of corona discharge is sequentially decreased, even an exhaust gas flow flowing an outermost perimeter is subjected to corona discharge at least once, and corona discharge can be performed uniformly and reliably on all exhaust gas flows.
(2). By increasing the diameter of the tubular collecting module on the downstream side of the exhaust gas flow, PM particle aggregation grown as repeatedly falling off and being deposited in the precipitation electrode in the axial direction are subjected to corona discharge and electrically charged by the discharge electrode of the next tubular collecting module immediately upon falling off from the end part of the precipitation electrode on the downstream side, and are deposited to the precipitation electrode of this next tubular collecting module. Then, as being grown by repeating deposition and falling off, the aggregation flows to the downstream side, and are eventually deposited to the tubular collecting unit at the last stage, fall off to be diverted to the high-concentration discharging unit, and flow out to the inlet to the tangential cyclone or collision-type inertial-force particle separator.
(3). With the discharge electrode disposed in a space between the main collecting pipe of the tubular collecting unit and the tubular collecting module, a plurality of flows can be simultaneously subjected to corona discharge at the same position in the flowing direction of the exhaust gas. PM particles of each flow are grown as repeating deposition and falling off to and from the collecting surface, thereby decreasing the size of the equipment and improving collection efficiency.
(4). In a space between the main collecting pipe of the tubular collecting unit and the tubular collecting module, a plurality of sets of tubular collecting modules each formed of a discharge electrode and a precipitation electrode are concentrically disposed with their diameters varied, and all flows can be simultaneously subjected to corona discharge at the same position in the flowing direction of the exhaust gas. With this, PM particles of each flow are grown, thereby decreasing the side of the device and improving collection efficiency.
(5). The diameter of the main collecting pipe of the tubular collecting unit where a plurality of tubular collecting modules each formed of a discharge electrode and a precipitation electrode is increased toward a downstream in the flowing direction of the exhaust gas from other portions. With this, the flow velocity of the exhaust gas flow is decreased, corona discharge to the PM particles (PM aggregation) and attachment to the precipitation electrode are more ensured, and collection efficiency can be improved.
(6). When a downstream-side tubular collecting module adjacent to a tubular collecting module on an upstream side of the exhaust gas and having a diameter larger than that of the upstream-side tubular collecting module is disposed, the diameter of the discharge electrode of this downstream-side tubular collecting module is set equal to or smaller than the inner diameter of the precipitation electrode of the upstream-side tubular collecting module. With this, PM particle aggregation falling off from the end part on a downstream side of the precipitation electrode of the downstream-side tubular collecting module immediately flow into (encounter) a high-potential tip part of the discharge electrode of the next tubular collecting module. With this, the PM particle aggregation is immediately subjected to corona discharge to be electrically charged instantly, and are reliably deposited to the precipitation electrode of the next tubular collecting module. Then, as growing by repeating deposition and falling off, the aggregation flows to the downstream side, and collection efficiency can be improved.
(7). When a downstream-side tubular collecting module adjacent to a tubular collecting module on an upstream side of the exhaust gas and having a diameter larger than that of the upstream-side tubular collecting module is disposed and the diameter of the discharge electrode of the downstream-side tubular collecting module is larger than the inner diameter of the precipitation electrode of the upstream-side tubular collecting module, collection efficiency can be improved similarly to the above by disposing a diameter transition part between the discharge electrodes of the upstream-side tubular collecting module and the downstream-side tubular collecting module, the diameter transition part sequentially increasing the diameters of the discharge electrodes.
(8). Between the diesel engine and the tubular collecting unit, a recirculation pipe which returns purified gas after passing through this precipitation means is provided, and kinetic energy imparting means for the exhaust gas refluxing in the recirculation pipe is provided. With this, in addition to the operations and effects of (1) to (7) described above, exhaust resistance can be decreased to improve engine efficiency and specific fuel consumption.
(9). The precipitation electrode configuring a collecting wall surface is formed of a cylindrical wall surface with annular-shaped or spiral-shaped projections and/or recesses by forming a plate with asperities such as a wave plate into a cylindrical shape. With this, a flow of PM particles electrically charged by corona discharge and carried on ionic wind to the precipitation electrode is disturbed or resides due to the presence of the spiral-shaped projections and/or recesses, thereby allowing an improvement in attachment ratio.
(10). The precipitation electrode configuring a collecting wall surface in a collecting unit other than the tubular collecting unit at the last stage is configured of a cylindrical wall surface with mesh through holes having many through holes and mesh through holes and asperities in a thickness direction on a peripheral edge of the mesh through holes, the cylindrical wall surface obtained by forming a plate or net having many through holes and mesh through holes and asperities in a thickness direction on a peripheral edge of the mesh through holes, such as expand metal, punching metal, plain weave/twill weave wire mesh, or wire net, into a cylindrical shape. With this, when PM particles electrically charged by corona discharge and carried on ionic wind reach the cylindrical wall surface as a precipitation wall surface, since the mesh through holes having many through holes and mesh through holes and asperities in the thickness direction on the peripheral edge of the mesh through holes are provided to the inner wall surface of the cylindrical wall surface, a phenomenon is prevented or hardly generated in which the PM particles are hit back by the inner wall surface of the cylindrical wall surface to be returned to an axial center direction of the cylindrical wall surfaces for backflow. Thus, with part of the PM particles carried on ionic wind passing through from the through holes to be merged into a flow flowing outside thereof, the concentration of PM particle aggregation in the flow can be more thickened, and a flow with more thickened concentration of PM particles can be led out to the high-concentration gas delivery (discharging) unit.
(11). By providing a bell mouth at an upstream end of the collecting pipe and providing a tapered and diameter-enlarged portion at a downstream end of the collecting pipe, effects described below can be achieved.
   (a). By providing a bell mouth at the upstream end of the collecting pipe, the exhaust gas flow can be reliably caused to flow inside the collecting pipe to increase the gas amount and increase the speed.
   (b). By providing a tapered and diameter-enlarged portion at the downstream end of the collecting pipe, the speed-increased gas flow flowing along the outer perimeter of the inside collecting pipe flows along the outer surface of the tapered and diameter-enlarged portion (a phenomenon in which a fluid flows along the surface of a subject is called "Coanda effect" and, with this phenomenon, the flow flows along the outer surface), and flows out as a flow outward in a radial direction, thereby suppressing a flow to an axial center direction of the collecting pipe (a direction away from the collecting wall surface).
   (c). By providing a tapered and diameter-enlarged portion at the downstream end of the collecting pipe, similarly to the above, the speed-increased gas flow flowing along the inner perimeter of the inside collecting pipe also flows out as a flow outward in the radial direction by the Coanda effect, thereby suppressing the flow to the axial center direction of the collecting pipe.
   (d). With the operations and effects of (a) to (c), as for the exhaust gas flow flowing out from the collecting pipe, the flow to the axial center direction of the collecting pipe is suppressed to increase the flow along the inner perimeter of the outside collecting pipe. With discharge from the electrode probes, PM particles are electrically charged reliably to obtain high collection efficiency.

   Note that the central angle of the tapered and diameter-enlarged portion at the downstream end of the collecting pipe is not particularly restrictive but is preferably 5 degrees to 15 degrees. The reason for this is that if the central angle is smaller than 5 degrees, the effect of suppressing the flow to the axial center direction of the collecting pipe is poor and, on the other hand, if the central angle exceeds 15 degrees, resistance increases to disturb the flow, thereby posing a fear of inducing an increase in flowing-down resistance of the exhaust gas flow and a decrease in collection efficiency and fuel efficiency.
(12). By providing, on the inner wall of the collecting pipe, a sub collecting pipe obtained by forming a member with many through holes such as expand metal, punching metal, plain weave/twill weave wire mesh, or wire net into a cylindrical shape, with the sub collecting pipe being in a state of being electrically conductive with the collecting pipe (main collecting pipe), PM particle aggregation electrically charged by corona discharge and carried on ionic wind reach many through holes to be deposited on the surface of the sub collecting pipe assuming a three-dimensional shape and having a large surface area. Then, as repeating deposition to and falling off from the inner wall of the sub collecting pipe and the surface of the collecting pipe while growing, the PM particle aggregation flows to a downstream side, and are eventually deposited to the tubular collecting unit at the last stage to fall off and be diverted to the high-concentration discharging unit to flow out to the inlet to the tangential cyclone or collision-type inertial-force particle separator, thereby allowing an improvement in collection efficiency. Note that as for a collecting unit other than the tubular collecting unit at the last stage, by combining this sub collecting pipe and the pipe wall obtained by forming a member with many through holes such as expand metal, punching metal, plain weave/twill weave wire mesh, or wire net into a cylindrical shape, a phenomenon is prevented or hardly generated in which the PM particles electrically charged by corona discharge and carried on ionic wind reach the pipe wall of the collecting pipe with many through holes to penetrate through the through holes and be merged into the flow flowing outside thereof and are hit back by the inner wall surface of the collecting pipe to be returned to the axial center direction of the pipe body for backflow. Thus, deposition to the surface of a collecting pipe at a subsequent stage can be more promoted.
(13). With the discharge electrode being a saw-blade-shaped discharge plate having an apical angle on the order of 20 degrees and assuming a substantially isosceles triangle, the width of the root part of the electrode (saw-blade-shaped discharge plate) is widened in the axial direction to increase the cross-sectional area, thereby significantly increasing the stiffness of the electrode to increase anti-deformation strength against vibration and so forth and ensure durability and also allowing large current of discharge current to increase effective field strength. The particles are electrically charged reliably to obtain Coulomb force and are collected.
(14). With the discharge electrode being a saw-blade-shaped discharge plate, the area where the swirl flow of the exhaust gas flowing at high speed abuts on the electrode is increased, and the area where the swirl flow can pass between electrodes can be decreased. Therefore, as the exhaust gas flow at high speed abuts on the discharge plate and is diffracted to a back side of the discharge plate, the flowing direction is deflected to the axial direction and kinetic energy is attenuated to decrease the speed of the flow. The particles are electrically charged more reliably to obtain Coulomb force and are collected.
(15). With the discharge electrode being configured of a saw-blade-shaped discharge electrode plate in which a saw-blade-shaped discharge unit is integrally provided with the substrate unit extending in the axial direction of the electrode rod (main electrode) and being provided to project from the electrode rod via the substrate unit, the area where the exhaust gas flow flowing at high speed abuts on the electrode is more increased, and the area where the exhaust gas flow can pass between electrodes can be further decreased. Therefore, as more exhaust gas flows at high speed abut on the discharge plate and are diffracted to a back side of the discharge plate, the flowing direction is deflected to the axial direction and kinetic energy is more attenuated to decrease the speed of the flow. Electric charging of the particles becomes more reliable to obtain large Coulomb force, and the particles are collected.
(16). Between the saw-blade-shaped discharge electrode groups and/or the saw-blade-shaped discharge electrode plates disposed in the axial direction and the circumferential direction of the electrode rod, band-shaped straightening vanes having a diameter smaller than the outer diameter of the saw-blade-shaped discharge electrode or the saw-blade-shaped discharge electrode plate are radially disposed along the axial direction of the main electrode. With this, the exhaust gas flow passing between the saw-blade-shaped electrodes is caused to actively abut to further attenuate kinetic energy of the exhaust gas flow, thereby allowing the flow to be further decelerated. Therefore, particles in the exhaust gas are electrically charged reliably to obtain large Coulomb force, and collection efficiency can be further improved.
(17). With a stay which fixes each of the tubular collecting units (collecting pipes with different diameters including small, intermediate, and large diameters) of the upstream-side tubular collecting module and the downstream-side tubular collecting module to the main collecting pipe being a plate-shaped long member extending in a tube axial direction and with a plurality of plate-shaped stays formed of the long member being arranged in a circumferential direction, the exhaust gas flow flowing in the respective collecting pipes can be caused to actively abut on these plate-shaped stays each formed of the long member. With straightening operation of the stays as straightening vanes, as for a flow between each of the tubular collecting units (collecting pipes with different diameters including small, intermediate, and large diameters) and the main collecting pipe, a swirl flow of the exhaust gas flow is suppressed to increase flow components in the axial direction and decrease the speed. In this state, the flow flows out into the large-diameter collecting pipe at the subsequent stage and is mixed into many flows in the axial direction decelerated in advance in the collecting pipe at the subsequent stage, particles are electrically charged more reliably to obtain large Coulomb force, and collection efficiency can be further improved.

### Brief Description of Drawings

Figure 1 is a schematic longitudinal cross-sectional view depicting an entire structure of a device of a first example of the present invention.
Figure 2 is a schematic longitudinal cross-sectional view depicting enlarged main parts of the device of the first example depicted in Figure 1.
Figure 3 is a schematic longitudinal cross-sectional view depicting enlarged main parts of a device of a second example of the present invention.
Figure 4 is a schematic longitudinal cross-sectional view depicting enlarged main parts of a device of a third example of the present invention.
Figure 5 is a schematic longitudinal cross-sectional view depicting enlarged main parts of a device of a fourth example of the present invention.
Figure 6 is a schematic longitudinal cross-sectional view depicting enlarged main parts of a device of a fifth example of the present invention.
Figure 7 is a schematic longitudinal cross-sectional view depicting enlarged main parts of a device of a sixth example of the present invention.
Figure 8 is a schematic longitudinal cross-sectional view depicting enlarged main parts of a device of a seventh example of the present invention.
Figure 9 is a schematic longitudinal cross-sectional view depicting enlarged main parts of a device of an eighth example of the present invention.
Figure 10 is a schematic longitudinal cross-sectional view depicting enlarged main parts of a device of a ninth example of the present invention.
Figure 11 is a schematic longitudinal cross-sectional view depicting an example in which a sub collecting pipe is disposed in a tubular collecting unit in the device of the present invention.
Figure 12 is a schematic longitudinal cross-sectional view depicting enlarged main parts of a device of a tenth example of the present invention.
Figure 13 is a descriptive diagram depicting an enlarged discharge electrode of the device of the tenth example depicted in Figure 12.
Figure 14 is a schematic longitudinal end-face view of a small-diameter collecting unit of the device of the tenth example depicted in Figure 12.
Figure 15 is a schematic longitudinal cross-sectional view depicting enlarged main parts of a device of an eleventh example of the present invention.
Figure 16 is a descriptive diagram depicting an enlarged discharge electrode of the device of the eleventh example depicted in Figure 15.
Figure 17 is a schematic longitudinal end-face view of a small-diameter collecting unit of the device of the eleventh example depicted in Figure 15.
Figure 18 is a schematic longitudinal cross-sectional view depicting enlarged main parts of a device of a twelfth example of the present invention.
Figure 19 is a descriptive diagram depicting an enlarged discharge electrode of the device of the twelfth example depicted in Figure 18.
Figure 20 is a schematic longitudinal end-face view of a small-diameter collecting unit of the device of the twelfth example depicted in Figure 18.
Figure 21 is a schematic longitudinal cross-sectional view depicting enlarged main parts of a device of a thirteenth example of the present invention.
Figure 22 is a schematic longitudinal end-face view of an intermediate-diameter collecting unit of the device of the thirteenth example depicted in Figure 21.
Figure 23 is a schematic longitudinal cross-sectional view depicting an example of a conventional diesel engine exhaust gas treatment equipment.
Figure 24 is a schematic longitudinal cross-sectional view depicting an example of the conventional diesel engine exhaust gas treatment equipment.
Figure 25 is a schematic longitudinal cross-sectional view depicting an example of the conventional diesel engine exhaust gas treatment equipment.
Figure 26 is a schematic longitudinal cross-sectional view depicting an example of the conventional diesel engine exhaust gas treatment equipment.
Figure 27 is a schematic longitudinal cross-sectional view depicting an example of the conventional diesel engine exhaust gas treatment equipment.
Figure 28 is a partially-enlarged longitudinal cross-sectional view of the diesel engine exhaust gas treatment equipment depicted in Figure 27.
Figure 29 is a schematic longitudinal cross-sectional view depicting an example of the conventional diesel engine exhaust gas treatment equipment.
Figure 30 is a schematic longitudinal cross-sectional view depicting an example of the conventional diesel engine exhaust gas treatment equipment.
Figure 31 is a descriptive diagram schematically depicting another example of cyclone collecting means in the conventional diesel engine exhaust gas treatment equipment depicted in Figure 29 and Figure 30.

### Description of Embodiments

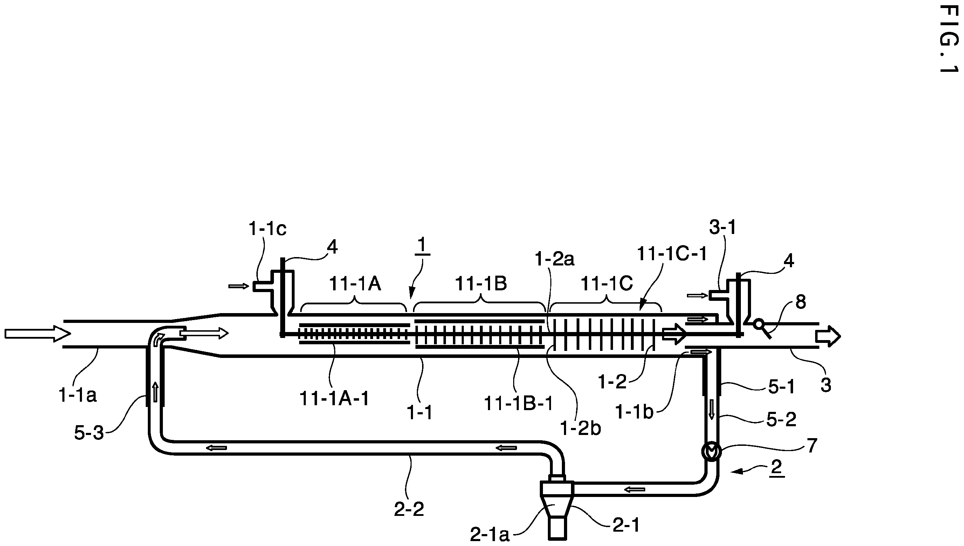

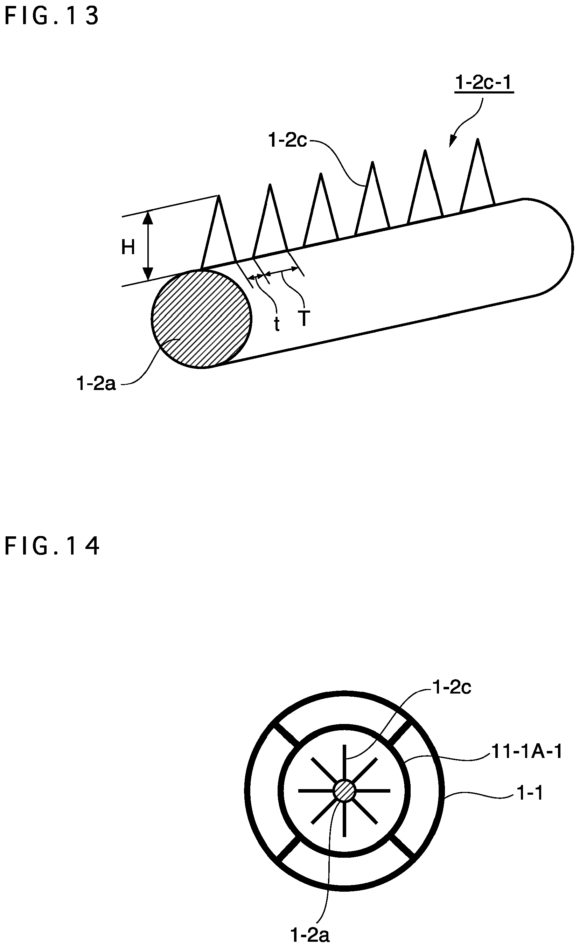

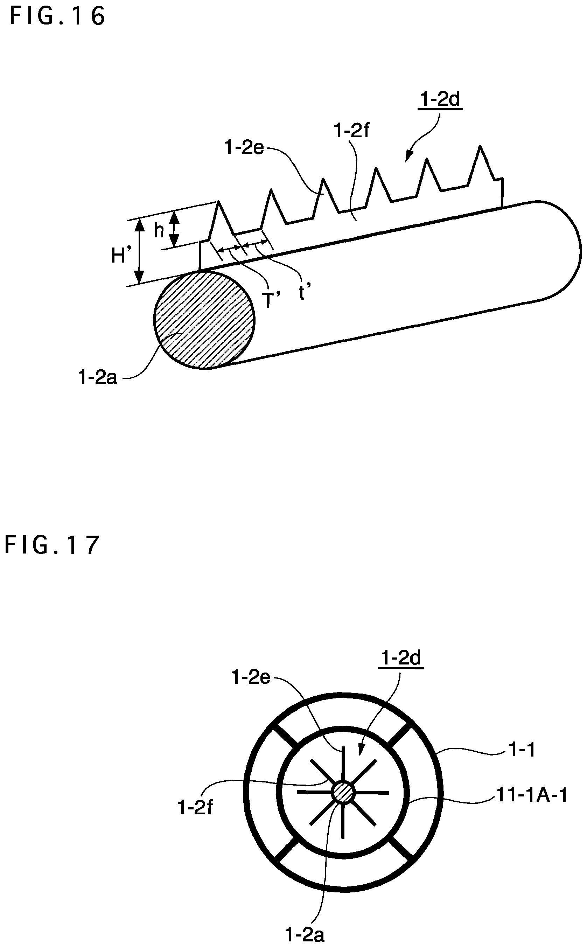

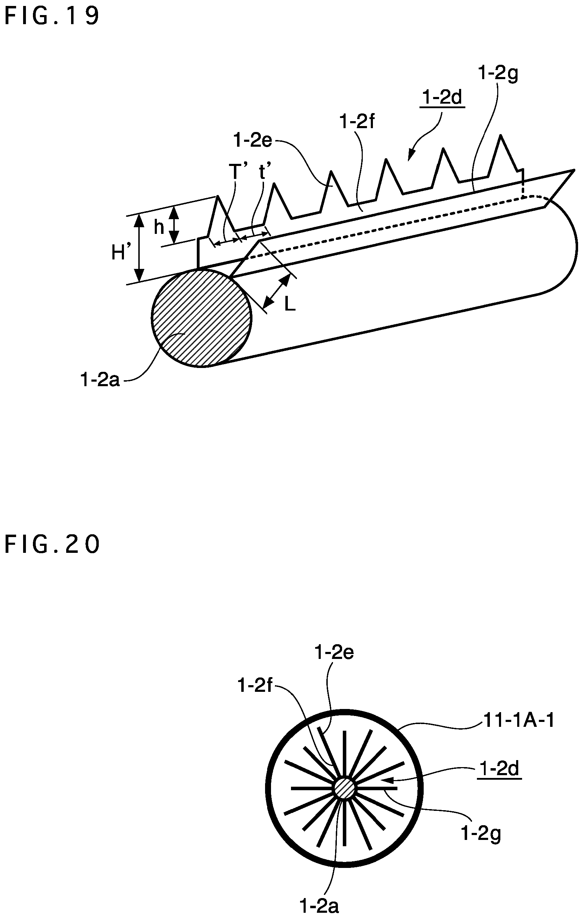

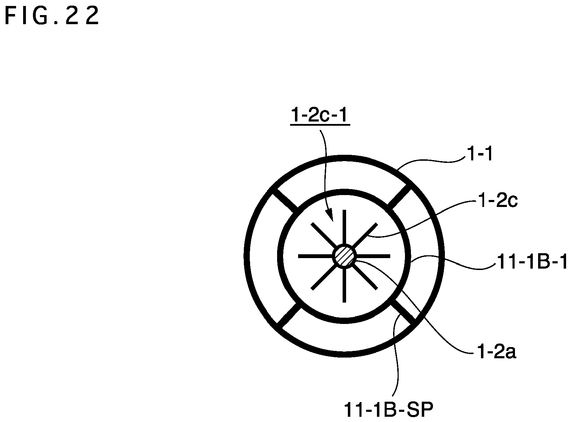

Devices of first to thirteenth examples of the present invention depicted in Figure 1 to Figure 22 illustrate a reflux scheme using a cyclone with a multistage type including a combination of collecting modules. Here, description is made by taking, as an example, a reflux scheme using a cyclone with a total three-to-seven stage type of the collecting modules in combination with a two-to-six stage type of tubular collecting modules including a small-diameter collecting unit, an intermediate-diameter collecting unit, and a large-diameter collecting unit, from an upstream side of a tubular collecting unit.

First, the basic structure of a diesel engine exhaust gas treatment equipment of a reflux scheme using a cyclone is described. A diesel engine exhaust gas treatment equipment has a tubular collecting unit that includes a combination of tubular collecting modules having a discharge electrode which electrically charge particulate matter contained in exhaust gas of a diesel engine using fuel oil and a precipitation electrode which collects the electrically-charged particulate matter, and includes a separating and collecting means of a tangential cyclone or collision-type inertial-force particle separator which separates and collects particulate matter falling off from the tubular collecting unit, wherein cyclone collecting means configured of a tangential cyclone is provided to a piping from a PM high-concentration exhaust gas delivery portion for particulate matter provided near an inner surface of the tubular collecting unit on a downstream side, thereby forming a scheme in which a PM high-concentration exhaust gas flow discharged from the high-concentration exhaust gas delivery portion is led into the tangential cyclone to collect and treat large-diameter particles. Also, the structure is such that, after large-diameter particles are collected by the tangential cyclone or a collecting unit of a collision-type inertial-force particle separation type, kinetic energy is provided by a blower to a flow with unremoved fine-diameter particles for increasing pressure and speed, and the flow is pumped and refluxed by a recirculation pipe to an inlet pipe (exhaust pipe). In particular, since a large amount of exhaust gas flows at high speed at the time of high engine load, a tapered pipe (reducer) is generally provided between the inlet pipe (exhaust pipe) and the collecting pipe made to have a large diameter so as to decrease flow velocity to ensure electrical charge to PM.

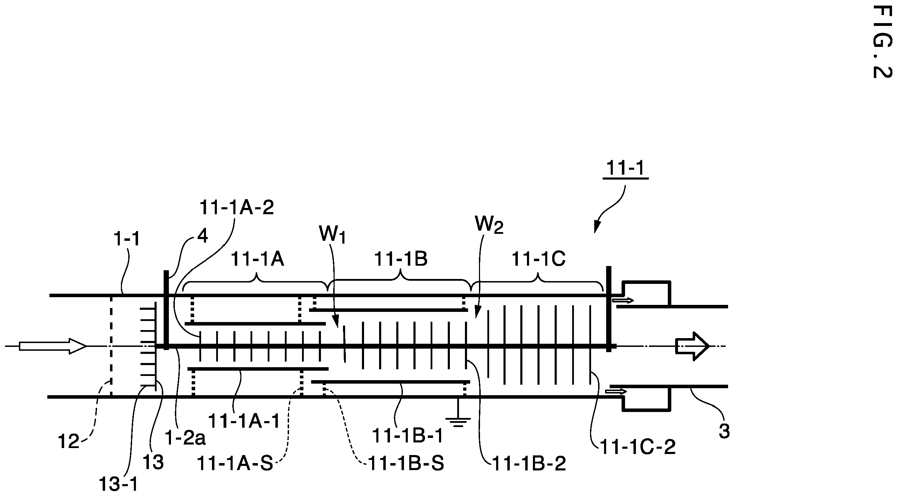

Specific description is made by taking, as an example, the device of the first example of the present invention depicted in Figure 1 and Figure 2. A diesel engine exhaust gas treatment equipment of a reflux scheme using a cyclone is configured broadly of an electric precipitation unit 1 provided to collect PM particles and a separating and collecting means 2 of a cyclone type, and the electric precipitation unit 1 includes a three-stage type of collecting modules having a main collecting pipe 1-1 and small and intermediate-diameter collecting pipes with a predetermined length and a constant diameter configuring a precipitation electrode of a tubular collecting unit 11-1 and a discharge electrode 1-2 which electrically charges PM contained in exhaust gas. The main collecting pipe 1-1 configuring a precipitation electrode has an exhaust gas inlet pipe (exhaust pipe) 1-1a at an end part on an upstream side (diesel engine side), and has a PM low-concentration exhaust gas delivery pipe 3 consecutively connected near an axial center of an end part on a downstream side and a PM high-concentration exhaust gas delivery portion 1-1b consecutively connected near an inner circumferential surface of the end part on the downstream side. The discharge electrode 1-2 is configured of an electrode rod (main electrode) 1-2a extending over an approximately full length near the axial center of the main collecting pipe 1-1 with the predetermined length and a constant diameter configuring the precipitation electrode and a group of electrode probes 1-2b provided to radially protrude and disposed with a desired space in a longitudinal direction of the electrode rod 1-2a. In the above-configured discharge electrode 1-2, the main electrode 1-2a is supported at both end parts via a seal-air inlet pipe 1-1c provided on an exhaust gas inlet pipe 1-1a side of the main collecting pipe 1-1 and a support body 4 vertically provided to a seal-air inlet pipe 3-1 provided at an entrance portion of the PM low-concentration exhaust gas delivery pipe 3.

On the other hand, the separating and collecting means 2 of the cyclone scheme provided between the downstream side and the upstream side of the electric precipitation unit 1 in the flowing direction of the exhaust gas described above is configured of a cyclone collecting unit 2-1 as separating means and a recirculation pipe 2-2 from the cyclone collecting unit 2-1. This cyclone collecting unit 2-1 is configured of one tangential cyclone 2-1a connected via a communicating pipe 5-1 and a PM high-concentration exhaust gas pipe 5-2 to the PM high-concentration exhaust gas delivery portion 1-1b provided near the inner surface perimeter on the downstream side of the main collecting pipe 1-1 of the electric precipitation unit 1. Furthermore, between the tangential cyclone 2-1a and the exhaust gas inlet pipe 1-1a on the upstream side of the main collecting pipe 1-1 of the electric precipitation unit 1, a recirculation pipe 2-2 and a communicating pipe 5-3 are disposed to merge purified gas after passing through the tangential cyclone 2-1a into exhaust gas flowing in the exhaust gas inlet pipe 1-1a. Also, a blower 7 is provided to the PM high-concentration exhaust gas pipe 5-2 between the communicating pipe 5-1 and the tangential cyclone 2-1a. This blower 7 is provided to provide kinetic energy to the exhaust gas flow to increase pressure and speed to improve collection efficiency at the tangential cyclone 2-1a and reliably pump and return the exhaust gas flow containing fine-diameter particles unremoved by the tangential cyclone 2-1a via the recirculation pipe 2-2 to the exhaust gas inlet pipe 1-1a. Note that, although not depicted, in place of the blower 7 provided to the PM high-concentration exhaust gas pipe 5-2 or the recirculation pipe 2-2, a high air injection nozzle may be provided to inject high-pressure air (normally, compressed air) to provide kinetic energy to the exhaust gas flow. Furthermore, the PM low-concentration exhaust gas delivery pipe 3 is provided with a dumber 8 for flow-rate adjustment of a PM high-concentration exhaust gas inflow amount and inflow velocity to the tangential cyclone 2-1a and a PM low-concentration exhaust gas discharge amount.

The diesel engine exhaust gas treatment equipment of the reflux scheme using the cyclone with a tubular collecting unit 11-1 including a three-stage type of collecting modules in combination with a two-stage type of tubular collecting modules of the present invention depicted in Figure 1 and Figure 2 is configured so that two tubular collecting modules with different diameters including small and intermediate diameters and a collecting module with a large diameter configured by combining, in an axial direction, the tubular collecting modules having discharge electrodes and precipitation electrodes arranged to have an outer diameter smaller than a main collecting pipe 1-1 with the predetermined length and a constant diameter are sequentially arranged from an upstream side to a downstream side. Tubular collecting modules at first and second stages are set to have a small diameter and an intermediate diameter, respectively and the third stage of collecting module is set to have a large diameter. That is, the tubular collecting module of the small diameter at the first stage on an uppermost stream side is set as a small-diameter collecting unit 11-1A, which is the tubular collecting module with the small diameter, having a small-diameter collecting pipe 11-1A-1 as a precipitation electrode fixed to the main collecting pipe 1-1 with a stay 11-1A-S and having incorporated therein a radial first-stage discharge electrode 11-1A-2 with a space suitable for corona discharge retained between the electrodes and the small-diameter collecting pipe 11-1A-1, the electrodes fixed to one common electrode rod 1-2a. Next, the tubular collecting module of the intermediate diameter at the second stage is set as an intermediate-diameter collecting unit 11-1B, which is the tubular collecting module with the intermediate diameter, having an intermediate-diameter collecting pipe 11-1B-1 as a precipitation electrode similarly fixed to the main collecting pipe 1-1 with a stay 11-1B-S and having incorporated therein a radial second-stage discharge electrode 11-1B-2 with a space suitable for corona discharge retained between the electrodes and the intermediate-diameter collecting pipe 11-1B-1, the electrodes fixed to the common electrode rod 1-2a. Furthermore, the collecting module of the largest diameter at the third stage on a lowermost stream side is set as a large-diameter collecting unit 11-1C, which is the tubular collecting module with the large diameter, having a large-diameter collecting pipe 11-1C-1 as a collecting pipe and common to the main collecting pipe 1-1 as precipitation electrode and having incorporated therein a radial third-stage discharge electrode 11-1C-2 with a space suitable for corona discharge retained between the electrodes and the large-diameter collecting pipe 11-1C-1, the electrodes fixed to the common electrode rod 1-2a. Here, the disposed outer diameter of the discharge electrode 11-1B-2 of the intermediate-diameter collecting unit 11-1B can be set to be equal to the inner diameter of the small-diameter collecting pipe 11-1A-1 or smaller than the inner diameter of the small-diameter collecting pipe 11-1A-1 and larger than the disposed outer diameter of the discharge electrode 11-A-2 of the small-diameter collecting unit 11-1A. Also, this disposed outer diameter of the discharge electrode 11-1B-2 of the intermediate-diameter collecting unit 11-1B may be larger than the inner diameter of the small-diameter collecting pipe 11-1A-1. In this case, a diameter transition part W1 is provided which makes the disposed outer diameter of the discharge electrode 11-1A-2 on the small-diameter collecting unit 11-1A side gradually larger than the disposed outer diameter of the discharge electrode 11-1A-2 of the small-diameter collecting unit 11-1A. Note that this diameter transition part W1 may be adopted when the diameter is provided to be equal to the inner diameter of the small-diameter collecting pipe 11-1A-1 or smaller than the inner diameter of the small-diameter collecting pipe 11-1A-1. Furthermore, the disposed outer diameter of the discharge electrode 11-1C-2 of the large-diameter collecting unit 11-1C is set to be equal to the inner diameter of the intermediate-diameter collecting pipe 11-1B-1 or smaller than the inner diameter of the intermediate-diameter collecting pipe 11-1B-1 and larger than the disposed outer diameter of the discharge electrode 11-1B-2 of the intermediate-diameter collecting unit 11-1B. Here, the disposed outer diameter of the discharge electrode 11-1C-2 of the large-diameter collecting unit 11-1C may be larger than the inner diameter of the intermediate-diameter collecting pipe 11-1B-1. In this case, a diameter transition part W2 is provided which makes the disposed outer diameter of the discharge electrode on the intermediate-diameter collecting unit 11-1B side gradually larger than the disposed outer diameter of the discharge electrode 11-1B-2 of the intermediate-diameter collecting unit 11-1B. Note that the diameter transition part W2 may be adopted when the diameter is provided to be equal to the inner diameter of the intermediate-diameter collecting pipe 11-1B-1 or smaller than the inner diameter of the intermediate-diameter collecting pipe 11-1B-1. Also, at an uppermost stream of the exhaust gas flow, a charge/discharge electrode 13 is provided, in which discharge electrode probes 13-1 are arranged in a lattice or concentric shape with respect to a mesh charging antipole 12 as depicted in Figure 2 so that all exhaust gas flows can be subjected to corona discharge in advance to once electrically charge all PM fine particles.

In the diesel engine exhaust gas treatment equipment of the reflux scheme using the cycle with a tubular collecting unit 11-1 including a three-stage type of collecting modules in combination with a two-stage type of tubular collecting modules of the present invention depicted in Figure 1 and Figure 2 described above, the exhaust gas flow flowing in the small-diameter collecting pipe 11-1A-1 has PM particles electrically charged by corona discharge by the discharge electrode 11-1A-2 of the small-diameter collecting unit 11-1A and attached to the precipitation electrode of the small-diameter collecting unit 11-1A. Then, as repeating attachment and falling off, the flow goes, with their concentration of PM particle aggregation thickened, to a flow near the precipitation electrode and to a downstream side, thereby flowing out to the intermediate-diameter collecting unit 11-1B. In the intermediate-diameter collecting unit 11-1B, the flow containing much aggregations of PM particles flowing out from the small-diameter collecting unit 11-1A and an exhaust gas flow positioned in a diameter between the intermediate-diameter collecting unit 11-1B and the small-diameter collecting unit 11-1A are merged. The merged exhaust gas flow flowing in the intermediate-diameter collecting pipe 11-1B-1 is electrically charged by corona discharge by the discharge electrode 11-1B-2 of the intermediate-diameter collecting unit 11-1B and attached to the precipitation electrode of the intermediate-diameter collecting unit 11-1B. Then, as repeating attachment and falling off, the flow goes, with concentration of PM particle aggregation further thickened, to a flow near the precipitation electrode and to a downstream side, thereby flowing out to the large-diameter collecting unit 11-1C. In the large-diameter collecting unit 11-1C, this flow containing much aggregation of PM particles flowing out from the intermediate-diameter collecting unit 11-1B and an exhaust gas flow positioned in a diameter between the intermediate-diameter collecting unit 11-1B and the large-diameter collecting unit 11-1C are merged. This merged exhaust gas flow flowing in the large-diameter collecting pipe 11-1C-1 has PM particles electrically charged by corona discharge by the discharge electrode 11-1C-2 of the large-diameter collecting unit 11-1C and attached to the precipitation electrode of the large-diameter collecting unit. Then, as repeating attachment and falling off, the flow goes, with concentration of PM particle aggregation further thickened, to a flow near the precipitation electrode and to a downstream side, thereby reaching the PM high-concentration gas delivery (discharging) portion and being led out via a branched channel to the cyclone collecting unit 2-1 formed of the tangential cyclone (or collision-type inertial-force particle separator).

The precipitation electrode configuring a collecting wall surface can be configured of a cylindrical wall surface with annular-shaped or spiral-shaped projections and/or recesses by forming a plate with asperities such as a wave plate into a cylindrical shape. With the precipitation electrode configured of this cylindrical wall surface, a flow of PM particles electrically charged by corona discharge and carried on ionic wind to the precipitation electrode is disturbed or stagnates or resides near the cylindrical wall surface due to the presence of the spiral-shaped projections and/or recesses, thereby allowing an improvement in attachment ratio. Also, the precipitation electrode configuring a collecting wall surface in a tubular collecting module that is a collecting unit other than the collecting module at the last stage is preferably configured of a cylindrical wall surface with mesh through holes having many through holes and mesh through holes and asperities in a thickness direction on a peripheral edge of the mesh through holes, such as expand metal, punching metal, plain weave/twill weave wire mesh, or wire net. With the precipitation electrode of the collecting unit other than the cylindrical collecting unit at the last stage configured of this cylindrical wall surface, when PM particles electrically charged by corona discharge and carried on ionic wind reach the cylindrical wall surface as a precipitation wall surface, since the mesh through holes having many through holes and mesh through holes and asperities in the thickness direction on the peripheral edge of the mesh through holes are provided to the inner wall surface of the cylindrical wall surface, a phenomenon is prevented or hardly generated in which the PM particles are hit back by the inner wall surface of the cylindrical wall surface to be returned to an axial center direction of the cylindrical wall surface for backflow. Thus, with part of the PM particles carried on ionic wind passing through from the through holes to be merged into a flow flowing outside thereof, the concentration of PM particle aggregation in the flow flowing outside thereof can be more thickened, and a flow with more thickened concentration of PM particles can be led out to the PM high-concentration gas delivery (discharging) portion.

According to the above-configured diesel engine exhaust gas treatment equipment of the reflux scheme using the cycle with the tubular collecting unit 11-1 including the three-stage type of the collecting modules in combination with the two-stage type of the tubular collecting modules of the present invention depicted in Figure 1 and Figure 2, with the presence of the small-diameter collecting pipe 11-1A-1, the intermediate-diameter collecting pipe 11-1B-1, and the large-diameter collecting pipe 11-1C-1, the exhaust gas flow is straightened, and also all PM particles in all flows are uniformly electrically charged and agglomerated to achieve condensation and separation. Also, with the mesh charging antipole 12 installed at the uppermost stream of the exhaust gas flow and the charge/discharge electrode 13 with the discharge electrode probes arranged in a lattice or concentric shape, all exhaust gas flows can be subjected to corona discharge in advance to once electrically charge all PM fine particles, thereby allowing subsequent attachment to the collecting electrodes to be promoted.

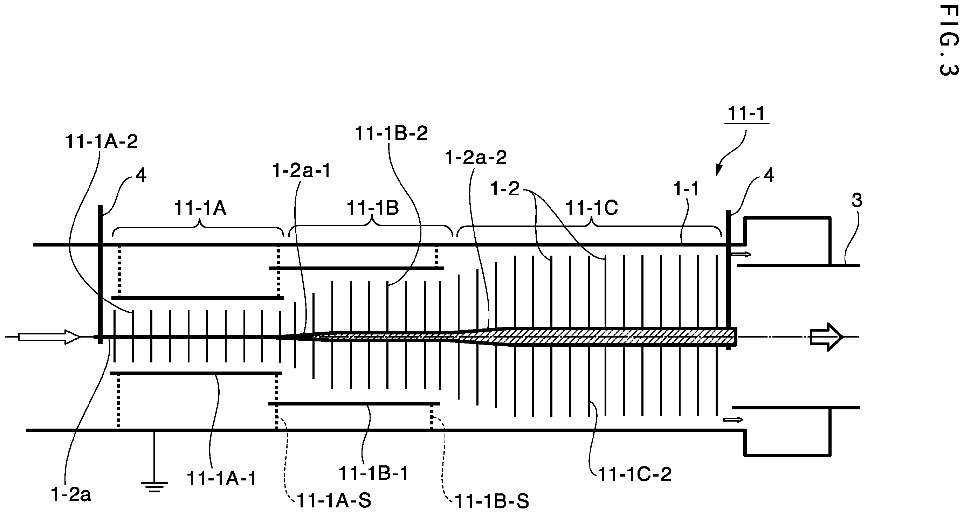

In the device of the second example of the present invention depicted in Figure 3, the electrode rod diameter of one common electrode rod 1-2a is set so that the small-diameter collecting unit 11-1A < the intermediate-diameter collecting unit 11-1B < the large-diameter collecting unit 11-1C, and gradually-increased diameter units 1-2a-1 and 1-2a-2 are provided between the small-diameter collecting unit 11-1A and the intermediate-diameter collecting unit 11-1B and between the intermediate-diameter collecting unit 11-1B and the large-diameter collecting unit 11-1C, respectively, thereby enhancing stiffness of the electrode rod and improving vibration resistance. Also, here, by partially overlapping the length positions of the small-diameter collecting pipe 11-1A-1 and the intermediate-diameter collecting pipe 11-1B-1 in an exhaust gas flowing direction at their end parts, the fixing stays 11-1A-S and 11-1B-S of the small-diameter collecting pipe 11-1A-1 and the intermediate-diameter collecting pipe 11-1B-1 at the overlapping position can be made common to each other at the same position.

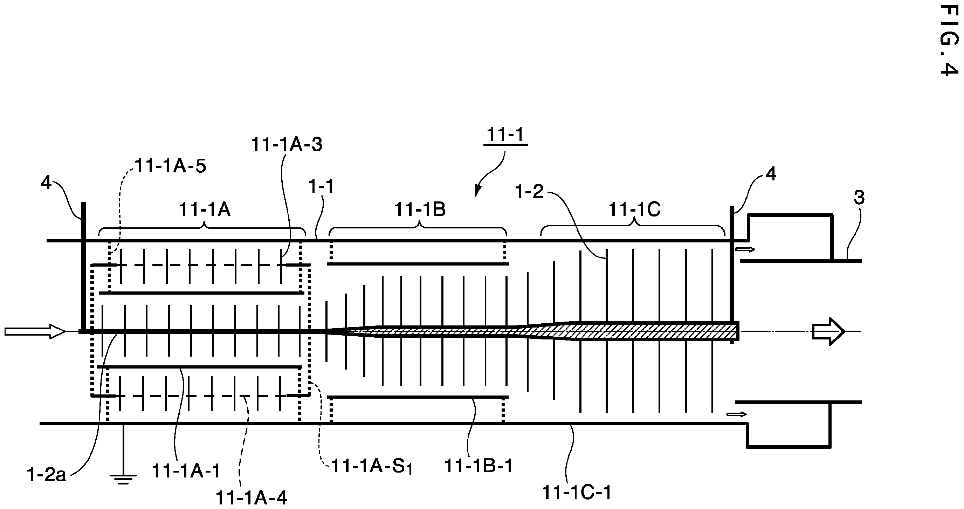

The device of the third example of the present invention depicted in Figure 4 is configured so that, in a device adopting an electrode rod having a gradually-increased diameter unit in an axial direction of a tubular collecting unit 11-1 similar to the device of the second example depicted in Figure 3 described above, an electrode cylinder 11-1A-4 with a discharge electrode 11-1A-3 attached in a space between the small-diameter collecting pipe 11-1A-1 of the small-diameter collecting unit 11-1A, which is a tubular collecting module with the small diameter, and the main collecting pipe 1-1 with a predetermined length and a constant diameter is arranged with an electrode stay 11-1A-5. This discharge electrode 11-1A-3 is supported in the space between the small-diameter collecting pipe 11-1A-1 of the small-diameter collecting unit 11-1A and the main collecting pipe 1-1 by an electrode stay 11-1A-S1 radially arranged in the electrode cylinder 11-1A-4 having the discharge electrode 11-1A-3 attached thereto so as to form the tubular collecting module comprising the main collecting pipe 1-1 and the small-diameter collecting pipe 11-1A-1 configuring the discharge electrode 11-1A-3 and the precipitation electrode.

In the device of the third example of the present invention depicted in Figure 4 described above, PM particles in the exhaust gas flow flowing in the small-diameter collecting pipe 11-1A-1 are electrically charged by corona discharge by the radial first-stage discharge electrode 11-1A-2 of the small-diameter collecting unit 11-1A and are attached to the precipitation electrode of the small-diameter collecting unit. Then, as repeating attachment and falling off, the PM particles flow, with concentration of PM particle aggregation thickened, to a flow near the precipitation electrode and to a downstream side, thereby flowing out to the intermediate-diameter collecting unit 11-1B, which is a tubular collecting module with the intermediate diameter. PM particles in the exhaust gas flow flowing in the tubular collecting module outside of the small-diameter collecting pipe 11-1A-1 are electrically charged by corona discharge by the discharge electrode 11-1A-3 attached to the electrode cylinder 11-1A-4, are attached to, deposited on, and fall off from the outer surface of the small-diameter collecting pipe 11-1A-1 of the small-diameter collecting unit 11-1A repeatedly to flow out, and are merged into a flow flowing in the small-diameter collecting pipe 11-1A-1 to thicken concentration of PM particle aggregation and then flowing out, thereby flowing out to an intermediate-diameter collecting unit 11-1B side. On the other hand, PM particles in a flow flowing outside the electrode cylinder 11-1A-4 of an exhaust gas flow flowing outside the small-diameter collecting pipe 11-1A-1 are electrically charged by corona discharge by the discharge electrode arranged outside the electrode cylinder 11-1A-4, are attached to, deposited on, and fall off from the inner surface of the large-diameter main collecting pipe 1-1 of the small-diameter collecting unit 11-1A repeatedly to flow out, flow mainly outside the intermediate-diameter collecting pipe 11-1B-1, and are merged into a flow flowing in the intermediate-diameter collecting pipe 11-1B-1 to thicken concentration of PM particle aggregation and then flowing out, thereby flowing out toward a large-diameter collecting unit 11-1C, which is a tubular collecting module with the large diameter. In the intermediate-diameter collecting pipe 11-1B-1 part, the flow flowing in the small-diameter collecting pipe 11-1A-1 to thicken the concentration of PM particle aggregation and then flowing out and the flow into which the flow flowing inside the electrode cylinder 11-1A-4 outside the small-diameter collecting pipe 11-1A-1 to thicken concentration of PM particle aggregation and then flowing out is merged are electrically charged by corona discharge by the discharge electrode of the intermediate-diameter collecting unit 11-1B and are attached to the precipitation electrode of the intermediate-diameter collecting unit 11-1B. Then, as repeating attachment and falling off, the flow goes, with concentration of PM particle aggregation further thickened, to a flow near the precipitation electrode and to a downstream side, thereby flowing out to the large-diameter collecting unit 11-1C. In the large-diameter collecting unit 11-1C, flows flowing inside and outside the intermediate-diameter collecting pipe 11-1B-1 part to thicken concentration of PM particle aggregation are merged. The merged exhaust gas flow flowing in the large-diameter collecting pipe 11-1C-1 is electrically charged by corona discharge by the discharge electrode of the large-diameter collecting unit 11-1C, and is attached to the precipitation electrode of the large-diameter collecting unit 11-1C. Then, as repeating attachment and falling off, the flow goes, with concentration of PM particle aggregation further thickened, to a flow near the precipitation electrode and to a downstream side, thereby reaching the PM high-concentration gas delivery (discharging) portion and being led out via a branched channel to the tangential cyclone 2-1a (or collision-type inertial-force particle separator).

The device of the fourth example of the present invention depicted in Figure 5 employs a tubular collecting unit 21-1 including a six-stage type of collecting modules in combination of five sets of the tubular collecting modules arranged in a main collecting pipe 1-1 with a predetermined length and a constant diameter. That is, collecting pipes with different diameters from a small diameter to a large diameter are sequentially arranged, and the collecting modules with different diameters are arranged from an exhaust gas inlet side toward a delivery side so that the diameter is sequentially increased, with the diameter of the collecting module at the first stage on an uppermost stream side taken as a minimum collecting pipe diameter and the diameter of the collecting module at the sixth stage on a lowermost stream side taken as a maximum main collecting pipe diameter. From the uppermost stream side in the main collecting pipe 1-1, arranged are a first collecting unit 21-1A that is a first tubular collecting module configured of a first collecting pipe 21-1A-1 with the minimum diameter, a second collecting unit 21-1B that is a second tubular collecting module configured of a second collecting pipe 21-1B-1, a third collecting unit 21-1C that is a third tubular collecting module configured of a third collecting pipe 21-1C-1, a fourth collecting unit 21-1D that is a fourth tubular collecting module configured of a fourth collecting pipe 21-1D-1, a fifth collecting unit 21-1E that is a fifth tubular collecting module configured of a fifth collecting pipe 21-1E-1, and a sixth collecting unit 21-1F that is a sixth tubular collecting module configured of a sixth collecting pipe 21-1F-1 with the maximum diameter that serves as the main collecting pipe 1-1. Corona discharge, attachment and deposition, falling-off, and a condensation state of PM particle aggregation in each collecting unit are similar to those of each of the examples described above.

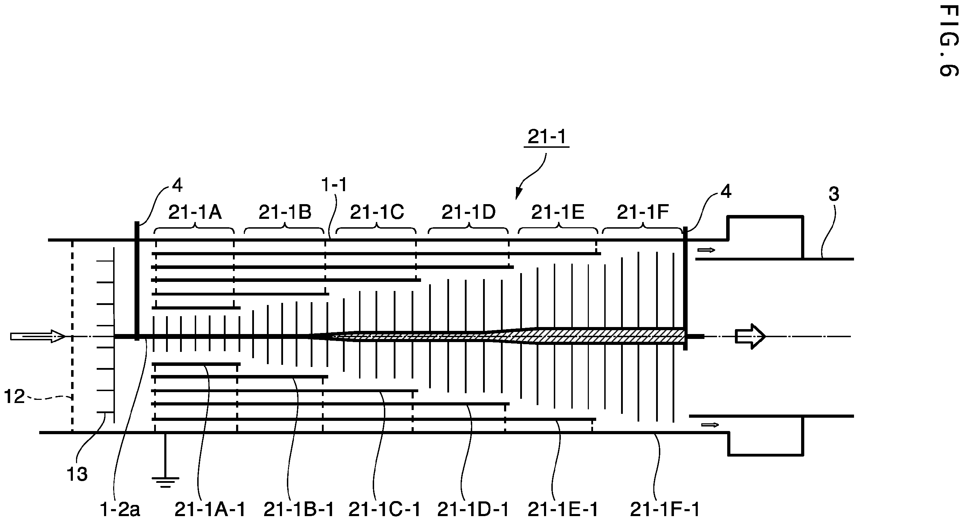

The device of the fifth example of the present invention depicted in Figure 6 is configured so that, in the device of the fourth example configured so that the tubular collecting modules are arranged in combination of five sets of the tubular collecting modules depicted in Figure 5 described above, end parts of the respective collecting pipes on an upstream side are arranged at an approximately same position. Specifically, the device is configured to have the collecting pipes with different lengths arranged so that end parts of the first collecting pipe 21-1A-1, the second collecting pipe 21-1B-1, the third collecting pipe 21-1C-1, the fourth collecting pipe 21-1D-1, and the fifth collecting pipe 21-1E-1 on an upstream side are at an approximately same position.

In this manner, by sequentially and consecutively arranging the collecting pipes with their lengths increased in a tube axial direction, effects can be obtained such that the exhaust gas flow is straightened to decrease disturbance of all flows to cause uniform electric charge and coagulation, achieve attachment and separation, and promote condensation. Note that also in the present example, corona discharge, attachment and deposition, and a condensation state of PM particle aggregation by falling-off and merging in each collecting unit are similar to those of each of the examples described above.

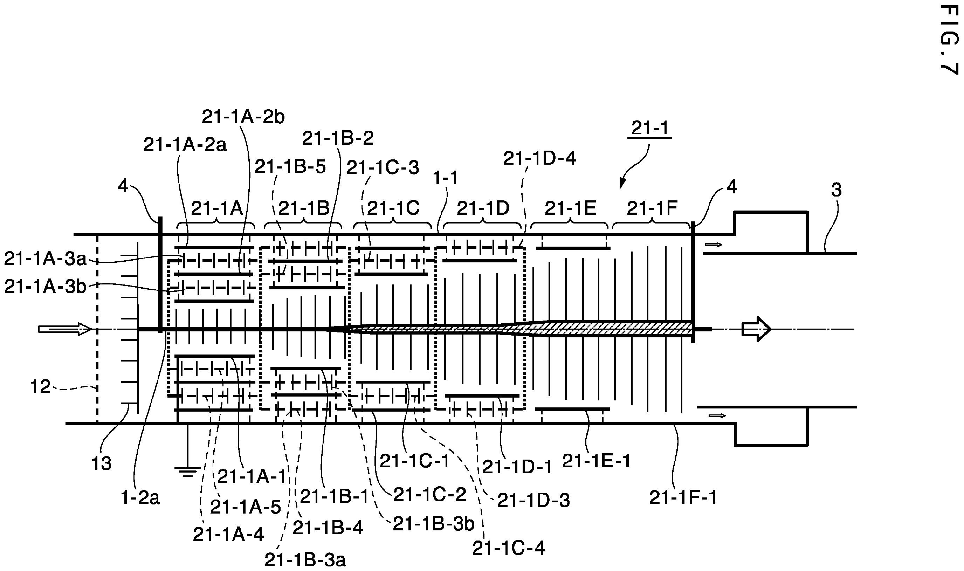

The device of the sixth example of the present invention depicted in Figure 7 is configured so that, in the device of the fourth example employing the tubular collecting unit 21-1 including a combination of five sets of the tubular collecting modules depicted in Figure 5 that are arranged in the main collecting pipe 1-1 with a predetermined length and a constant diameter, two sets of tubular collecting modules comprising two collecting pipes 21-1A-2a and 21-1A-2b with different diameters and two groups of discharge electrodes 21-1A-3a and 21-1A-3b are arranged in a space between the first collecting pipe 21-1A-1 of the first collecting unit 21-1A, which is a first tubular collecting module, and the main collecting pipe 1-1, two sets of tubular collecting modules comprising one collecting pipe 21-1B-2 and two groups of discharge electrodes 21-1B-3a and 21-1B-3b are arranged in a space between the second collecting pipe 21-1B-1 of the second collecting unit 21-1B, which is a second tubular collecting module, and the large-diameter main collecting pipe 1-1, a tubular collecting module comprising one collecting pipe 21-1C-2 and a discharge electrode 21-1C-3 are arranged in a space between the third collecting pipe 21-1C-1 of the third collecting unit 21-1C, which is a third tubular collecting module, and the main collecting pipe 1-1, and a tubular collecting module comprising one discharge electrodes 21-1D-3 and the large-diameter main collecting pipe 1-1 is arranged in a space between the fourth collecting pipe 21-1D-1 of the fourth collecting unit 21-1D, which is a fourth tubular collecting module, and the large-diameter main collecting pipe 1-1. In the drawing, 21-1A-4, 21-1A-5, 21-1B-4, 21-1B-5, 21-1C-4, and 21-1D-4 denote electrode cylinders.

In this manner, by consecutively arranging a plurality of sets of tubular collecting modules, that is, collecting pipes and discharge electrodes, in axial and radical directions, respectively, effects can be obtained such that the exhaust gas flow is straightened to electrically charge and coagulate PM particles in all flows over many times to repeat attachment and separation, thereby promoting condensation. Note that also in the present example, corona discharge, attachment and deposition, and a condensation state of PM particle aggregation by falling-off and merging in each collecting unit are similar to those of each of the examples described above.

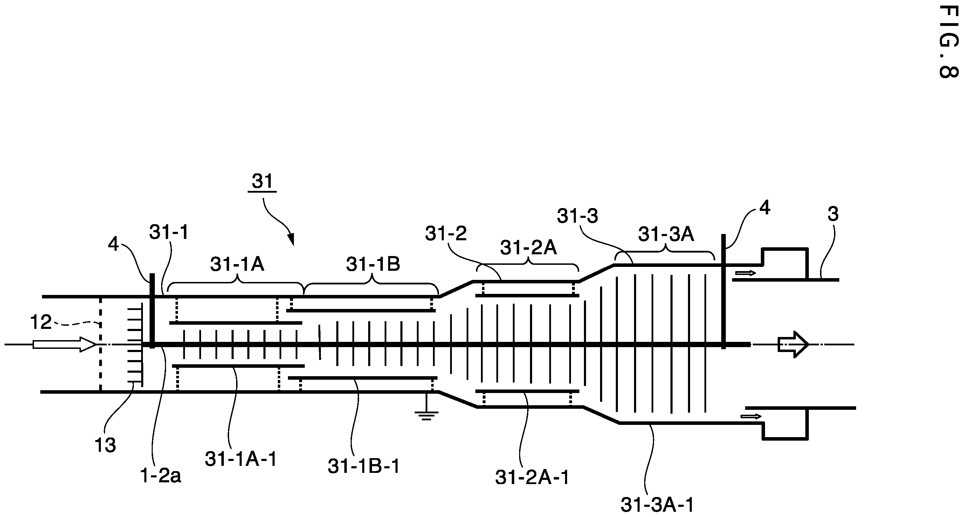

The device of the seventh example of the present invention depicted in Figure 8 is configured so that, in the structure using an electrode rod similar to that of the device of the first example depicted in Figure 1 and Figure 2 described above, three sets of tubular collecting modules are provided in combination and the outer diameter of the collecting pipe (main collecting pipe) is gradually increased to make a tubular collecting unit 31 having a four stages. Specifically, a small-diameter collecting unit 31-1A, which is a first tubular collecting module, formed of a small-diameter collecting pipe 31-1A-1 at a first stage provided to a main collecting pipe unit 31-1 with the same diameter, an intermediate-diameter collecting unit 31-1B, which is a second tubular collecting module, formed of an intermediate-diameter collecting pipe 31-1B-1 at a second stage provided to the main collecting pipe unit 31-1 with the same diameter, a first diameter-expanded collecting unit 31-2A, which is a third tubular collecting module, at a third stage formed of a first diameter-expanded collecting pipe 31-2A-1 provided to a first diameter-expanded collecting pipe unit 31-2, and a second diameter-expanded collecting unit 31-3A, which is a fourth tubular collecting module, at a fourth stage formed of a second diameter-expanded collecting pipe 31-3A-1 provided to a second diameter-expanded collecting pipe unit 31-3. In this manner, by configuring the device so that the diameters of the tubular collecting unit 31 with the plurality of tubular collecting modules disposed are expanded from another portion toward a downstream in a flowing direction of exhaust gas, the flow velocity of the exhaust gas is sequentially decreased to provide spare time to corona discharge to PM particles (PM aggregation) and attachment to the precipitation electrodes, thereby more ensuring attachment to promote condensation and allowing delivery to the tangential cyclone 2-1a (or collision-type inertial-force particle separator) via a branched channel. Note that also in the present example, corona discharge, attachment and deposition, and a condensation state of PM particle aggregation by falling-off and merging in each collecting unit are similar to those of each of the examples described above.

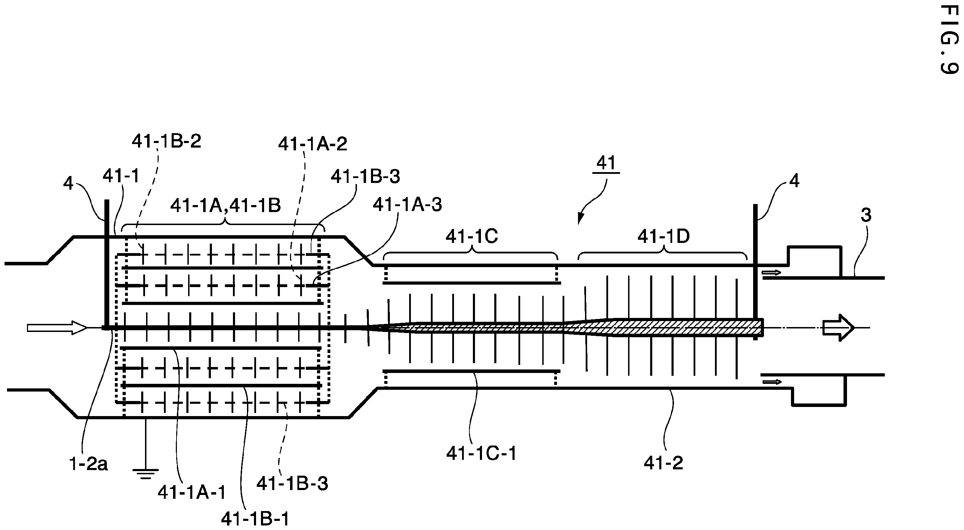

The device of the eighth example of the present invention depicted in Figure 9 is configured so that, in the device adopting a tubular collecting unit 41 including an electrode rod, depicted in Figures 3-7, having a gradually-increased diameter in an axial direction, two sets of tubular collecting modules are provided near the electrode rod on the upstream side and a collecting module is provided on the downstream, the diameter of a main collecting pipe on the upstream side is partially increased, and in this increased portion, a plurality of collecting modules are concentrically arranged. Specifically, the device is configured so that a large-diameter collecting pipe 41-1B-1 and discharge electrodes 41-1A-2 and 41-1B-2 are arranged in a space between a small-diameter collecting pipe 41-1A-1 of a small-diameter collecting unit 41-1A, which is a tubular collecting module with a small diameter, and a diameter-expanded collecting pipe 41-1 to form two tubular collecting modules in a large-diameter collecting unit 41-1B, and an intermediate-diameter collecting unit 41-C, which is a tubular collecting module with an intermediate diameter, formed of an intermediate-diameter collecting pipe 41-1C-1 and a collecting unit 41-1D, which is a normal collecting module, are sequentially arranged in a main collecting pipe unit 41-2 with a normal diameter on a downstream side of these small-diameter collecting unit 41-1A and large-diameter collecting unit 41-1B. In the drawing, 41-1A-3 and 41-1B-3 denote electrode cylinders.

In the case of the above-configured exhaust gas treatment equipment, PM particles in the exhaust gas flow flowing in the small-diameter collecting pipe 41-1A-1 are electrically charged by corona discharge by the discharge electrodes of the small-diameter collecting unit 41-1A and are attached to the precipitation electrodes of the small-diameter collecting unit 41-1A. Then, as repeating attachment and falling off, the PM particles flow, with concentration of PM particle aggregation thickened, to a flow near the precipitation electrode and to a downstream side, thereby flowing out to the intermediate-diameter collecting unit 41-1C. Also, with the concentrically-arrangement in the space between the small-diameter collecting unit 41-1A and the large-diameter collecting unit 41-1B in the diameter-expanded collecting pipe unit on the upstream side, all particles of PM particles in the exhaust gas are electrically charged reliably once and, together with the presence of the subsequent intermediate-diameter collecting unit 41-1C and normal collecting unit 41-1D, high collection efficiency can be obtained. Note that the exhaust gas flow flowing outside the small-diameter collecting pipe 41-1A-1 and corona discharge and condensation state of PM particle aggregation in the intermediate-diameter collecting pipe 41-1C-1 unit and the large-diameter collecting unit 41-1B are similar to those of the device of the third example described above.

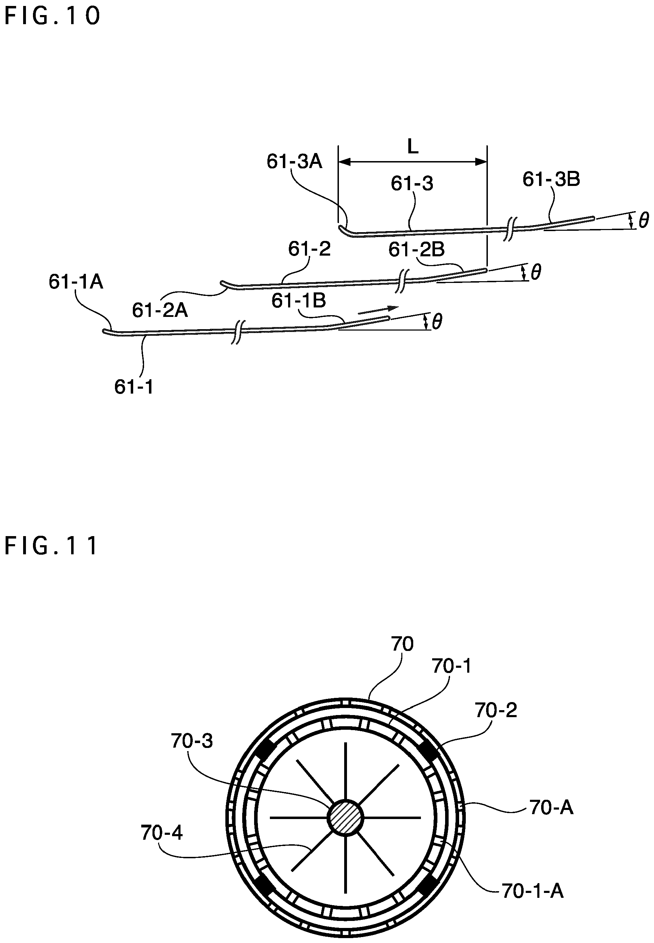

The device of the ninth example of the present invention depicted in Figure 10 specifies the cross-sectional shape of the collecting pipes that correspond to tubular precipitation electrodes of tubular collecting modules arranged in a main collecting pipe with a constant diameter in the device of each example described above, and shows a state of the collecting pipes overlapped one another at respective overlapped widths (L). In the structure in which a plurality of collecting pipes are arranged as being overlapped, bell mouths 61-1A, 61-2A, and 61-3A are provided at upstream ends of collecting pipes 61-1, 61-2, and 61-3, respectively, and tapered and diameter-enlarged portions 61-1B, 61-2B, and 61-3B are provided at downstream ends thereof. Here, a center half angle θ of each of the tapered and diameter-enlarged portions 61-1B, 61-2B, and 61-3B is preferably 5 degrees to 10 degrees.

In this manner, in the case of the collecting pipes 61-1, 61-2, and 61-3 provided with the bell mouths at their upstream ends and the tapered and diameter-enlarged portions at their downstream ends, the exhaust gas flow is reliably caused to flow between the collecting pipes by the bell mouths 61-1A, 61-2A, and 61-3A at the upstream ends of the respective collecting pipes to increase the exhaust gas amount and also increase the speed. Subsequently, the gas flow accelerated by the tapered and diameter-enlarged portion 61-1B, 61-2B, and 61-3B at the downstream ends flowing along the outer perimeter of an inside collecting pipe flows along the outer surfaces of the tapered and diameter-enlarged portions to flow out as a flow outward in a radial direction, and its flow suppresses a flow to an axial center direction of the collecting pipe (in a direction away from the collecting wall surface). Also, as with the gas flow flowing along the outer perimeter of the inside collecting pipe, the accelerated gas flow flowing along the inner perimeter of the inside collecting pipe becomes a flow outward in a radial direction by the Coanda effect (a phenomenon in which a fluid flows along the surface of a subject and an effect thereof) to flow out, thereby suppressing the flow to the axial center direction of the collecting pipe. With this suppressing effect on the flow in the axial center direction of the collecting pipe, in the exhaust gas flow flowing out from the collecting pipe, the flow in the axial center direction of the collecting pipe is suppressed, thereby increasing a flow along the outside inner perimeter and obtaining high collection efficiency.

In the device of the eighth example of the present invention depicted in Figure 11, a collecting pipe that corresponds to one of tubular precipitation electrodes of tubular collecting modules arranged in a main collecting pipe with a constant diameter in the device of each of the examples has configured in such a way that, on an inner peripheral wall of a pipe main body 70 formed of a normal cylindrical pipe or wave-shaped pipe, a sub collecting pipe 70-1 formed by forming a member with many through holes in a radial direction such as expand metal, punching metal, plain weave/twill weave wire mesh, or wire net into a cylindrical shape is mounted via a pipe main body 70 and a conductive stay 70-2 so as to be in an electrically conductive state. In the drawing, 70-3 denotes an electrode rod, and 70-4 denotes a discharge electrode.

In the case of the above-configured collecting pipe, PM particles electrically charged by corona discharge and carried on ionic wind reach many through holes 70-1-A of the sub collecting pipe 70-1 to assume a three-dimensional shape, and are deposited on the surface of the sub collecting pipe 70-1 with a large surface area. Then, as repeating deposition to and falling off from the inner wall of the collecting pipe and the surface of the collecting pipe while growing, the PM particles become aggregation to flow to a downstream side, and are eventually deposited to the tubular collecting unit of the collecting module at the last stage that is formed of the main collecting pipe and fall off to be diverted to the PM high-concentration discharging portion, thereby flowing out to an inlet to a tangential cyclone or collision-type inertial particle separator. Note that when one formed by forming a member with many through holes 70-A such as expand metal, punching metal, plain weave/twill weave wire mesh, or wire net into a cylindrical shape is used as the pipe main body 70, PM particles electrically charged by corona discharge and carried on ionic wind penetrate through many through holes 70-A to reach the pipe main body 70. With many through holes 70-A provided on the wall surface of the pipe main body, the PM particles carried on ionic wind from the through holes 70-A partially penetrate therethrough to be merged into a flow flowing outside thereof, thereby making it possible to prevent or hardly generate a phenomenon in which the PM particles are hit back by the inner wall surface of the cylinder main body and folded back to be returned in an axial center direction of the pipe main body for backflow. Therefore, in a collecting unit other than the tubular collecting unit of the collecting module at the last stage that is formed of the main collecting pipe, this cylinder body and the sub collecting pipe are preferably used in combination.

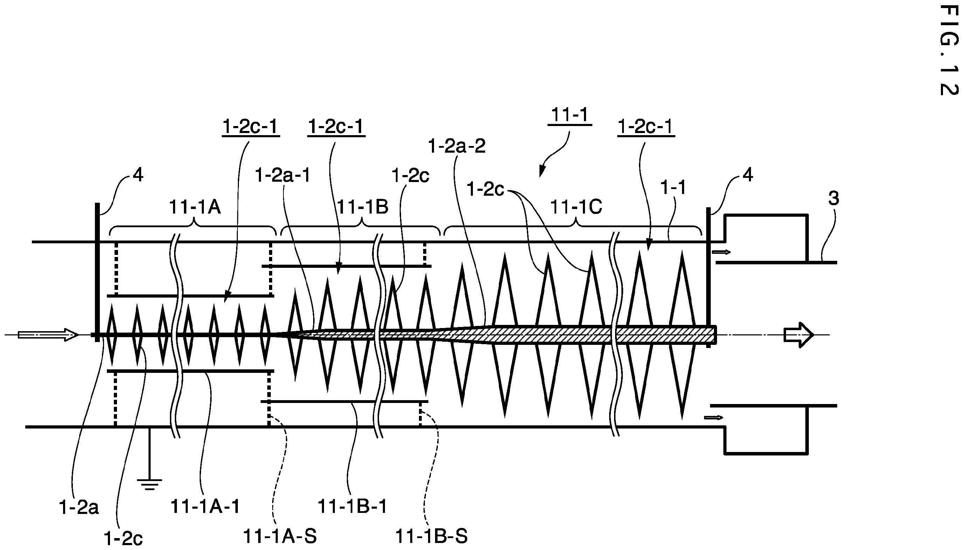

Next, in the devices of the tenth to thirteenth examples of the present invention depicted in Figure 12 to Figure 22, the structure of the discharge electrode in the devices of the first to ninth examples described above and the structure of the stay fixing each of the collecting pipes having small, intermediate, and large diameters to a main collecting pipe with a predetermined length and a constant diameter are specified, and description is made by taking, as an example, the case in which the examples are applied to the device of the second example depicted in Figure 3 described above.

The discharge electrode 1-2 in the devices of the first to ninth examples described above is configured of an electrode rod (main electrode) 1-2a and the group of electrode probes 1-2b provided to radially protrude and disposed with a desired space in an axial center direction of the electrode rod, and has the following problems. In particular, since narrow wire-shaped matters are used for the electrode probes 1-2b, it is difficult to sufficiently ensure anti-deformation strength of the electrode probes 1-2b against vibration and so forth. Since the electrode probe 1-2b has a narrow wire shape from its root portion and has a constant sectional area, it is difficult to support large-current discharge current. Since a contact between a gas swirl flow passing between the electrode probes 1-2b and the electrode probes 1-2b cannot be sufficiently obtained, a further improvement in particle collection efficiency cannot be expected. To solve these problems, the devices of the tenth to thirteenth examples of the present invention specify the structures of the discharge electrode and the stay.

In the device of the tenth example of the present invention depicted in Figure 12 to Figure 14, the electrode probes of the discharge electrode in the tubular collecting unit 11-1 in the device of the second example depicted in Figure 3 described above are configured of saw-blade-shaped discharge plates 1-2c each assuming a substantially isosceles triangle.

That is, in the device of the tenth example of the present invention, to enhance stiffness of the electrode rod of the tubular collecting unit 11-1 and improve vibration resistance, in an exhaust gas treatment equipment configured so that the electrode rod diameter of one common electrode rod 1-2a is set so that the small-diameter collecting unit 11-1A < the intermediate-diameter collecting unit 11-1B < the large-diameter collecting unit 11-1C, the gradually-increased diameter units 1-2a-1 and 1-2a-2 are provided between the small-diameter collecting unit 11-1A and the intermediate-diameter collecting unit 11-1B and between the intermediate-diameter collecting unit 11-1B and the large-diameter collecting unit 11-1C, respectively, and also, here, by partially overlapping the length positions of the small-diameter collecting pipe 11-1A-1 and the intermediate-diameter collecting pipe 11-1B-1 in the exhaust gas flowing direction at their end parts, the fixing stays 11-1A-S and 11-1B-S of the small-diameter collecting pipe 11-1A-1 and the intermediate-diameter collecting pipe 11-1B-1 at the overlapping position can be made common to each other at the same position, in place of the electrode probes 1-2b provided to radially protrude and disposed with a desired space in the axial center direction of the electrode rod 1-2a, saw-blade-shaped discharge electrode plates 1-2c having an apical angle on the order of 20 degrees and assuming a substantially isosceles triangle are adopted to configure a discharge electrode. In this manner, in the device of the present example, a plurality of saw-blade-shaped discharge electrode groups 1-2c-1 each formed by disposing the saw-blade-shaped discharge electrode plates 1-2c with a desired space in an axial center direction of the electrode rod 1-2a are radially disposed with a desired space in a circumferential direction of the electrode rod 1-2a to configure a discharge electrode. Note that a radial-direction protrusion length H of the saw-blade-shaped discharge electrode plate 1-2c is appropriately set in accordance with discharge voltage, discharge current, a flow rate range of the exhaust gas flow, a space from the collecting wall, the collecting unit diameter of each of the small-diameter collecting unit 11-1A that is a tubular collecting module with a small diameter, the intermediate-diameter collecting unit 11-1B that is a tubular collecting module with an intermediate diameter, and the large-diameter collecting unit 11-1C that is a tubular collecting module with a large diameter, and so forth, and an axial-direction width T and a space t of a root part of the discharge electrode plate 1-2c are also appropriately set in accordance with discharge voltage, discharge current, axial direction lengths of the small-diameter collecting unit 11-1A, the intermediate-diameter collecting unit 11-1B, and the large-diameter collecting unit 11-1C, and so forth.

As described above, in the case of the device of the tenth example adopting the discharge electrode in which the electrode probes are configured of the saw-blade-shaped discharge plates 1-2c, particularly the width of the root part of the discharge plates 1-2c is widened in an axial direction of the electrode rod 1-2a, thereby significantly increasing the stiffness of the discharge plates 1-2c to increase deformation strength against vibration and so forth and ensure durability and also allowing large current of discharge current to increase effective field strength. The particles are electrically charged reliably to obtain Coulomb force and are reliably collected to the collecting wall. Also, in the case of the saw-blade-shaped discharge plates 1-2c, the area where the exhaust gas flow flowing at high speed abuts is increased, and a space between the discharge plates where the exhaust gas flow passes can be decreased. Therefore, as the high-speed exhaust gas flow abuts on the discharge plates 1-2c and is diffracted to a back side of the discharge plates, the gas flowing direction is deflected to the axial direction and kinetic energy is attenuated to decelerate the gas flow. The particles are electrically charged more reliably to obtain Coulomb force and are collected.

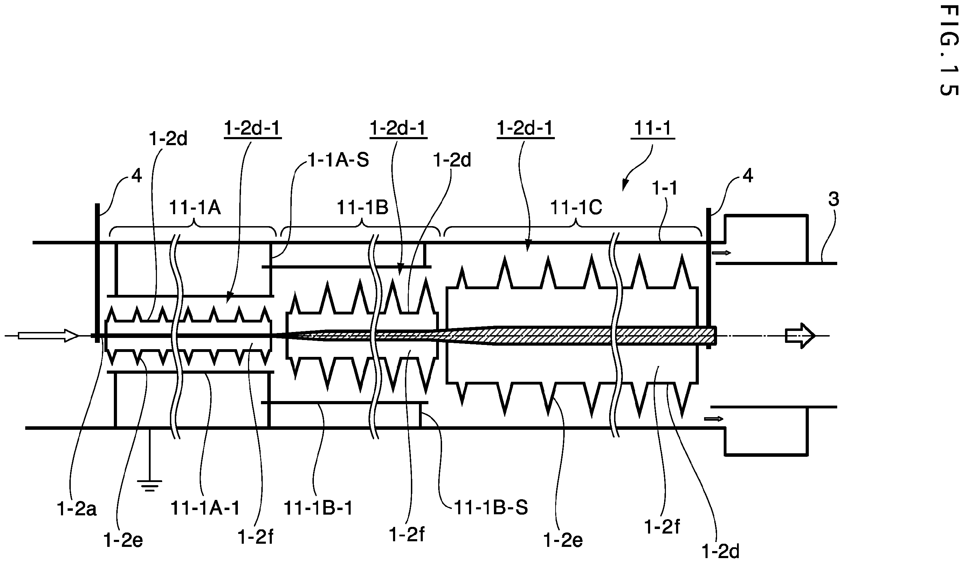

In the device of the eleventh example of the present invention depicted in Figure 15 to Figure 17, in place of the discharge plates 1-2c in the device of the tenth example described above, a saw-blade-shaped discharge electrode plate 1-2d in which saw-blade-shaped discharge plate parts (crest parts) 1-2e are provided integrally with a substrate unit 1-2f extending in an axial direction of the electrode rod 1-2a is adopted, and a discharge electrode configured to protrude from the electrode rod 1-2a via the substrate unit 1-2f is adopted. That is, in the device of the present example, a plurality of saw-blade-shaped discharge electrode groups 1-2d-1 formed by disposing the saw-blade-shaped discharge plate parts 1-2e with a desired space in an axial center direction of the electrode rod 1-2a are radially disposed with a desired space in a circumferential direction of the electrode rod 1-2a to configure a discharge electrode. Note that a radial-direction protrusion length H' of the saw-blade-shaped discharge electrode plate 1-2d having the substrate unit 1-2f and a radial-direction protrusion length h of the saw-blade-shaped discharge plate part 1-2e are appropriately set in accordance with discharge voltage, discharge current, a flow rate range of the exhaust gas flow, a space from the collecting wall, the collecting unit diameter of each of the small-diameter collecting unit 11-1A, the intermediate-diameter collecting unit 11-1B, and the large-diameter collecting unit 11-1C, and so forth, an axial-direction width T' of a root part of the saw-blade-shaped discharge plate part 1-2e and a space t' are also appropriately set in accordance with discharge voltage, discharge current, the diameter of the tubular collecting unit 11-1 corresponding to each of the small-diameter collecting unit 11-1A that is a tubular collecting module with a small diameter, the intermediate-diameter collecting unit 11-1B that is a tubular collecting module with an intermediate diameter, and the large-diameter collecting unit 11-1C that is a tubular collecting module with a large diameter, and so forth, and the number of saw-blade-shaped discharge electrode plates 1-2d is appropriately set in accordance with the length, outer diameter, and so forth of the electrode rod 1-2a.

In the case of the above-configured device of the eleventh example, the discharge electrode is configured of the saw-blade-shaped discharge electrode plate 1-2d in which the saw-blade-shaped discharge plate parts 1-2e are provided integrally with the substrate unit 1-2f extending in the axial direction of the electrode rod 1-2a, and is configured to protrude from the electrode rod 1-2a via the substrate unit 1-2f. Thus, particularly the width of the root part of the discharge plate part 1-2e is widened in the axial direction of the electrode rod 1-2a, thereby significantly increasing the stiffness of the discharge plate part 1-2e (particularly significant when integrally provided with the substrate unit 1-2f) to increase deformation strength against vibration and so forth and ensure durability and also allowing large current of discharge current to increase effective field strength. The particles are electrically charged reliably to obtain Coulomb force and are reliably collected to the collecting wall. Also, the area where the exhaust gas flow flowing at high speed abuts on the discharge electrode is further increased, and a space between the saw-blade-shaped discharge electrode plates 1-2d where the exhaust gas flow can pass can be further decreased. Therefore, as the exhaust gas flow at high speed more abuts on the saw-blade-shaped discharge electrode plate 1-2d and, as the flowing direction is diffracted to a back side of the saw-blade-shaped discharge electrode plates, the flowing direction is deflected to an axial direction and kinetic energy is more attenuated to decrease the speed of the flow. The particles are electrically charged more reliably to obtain large Coulomb force and are collected.

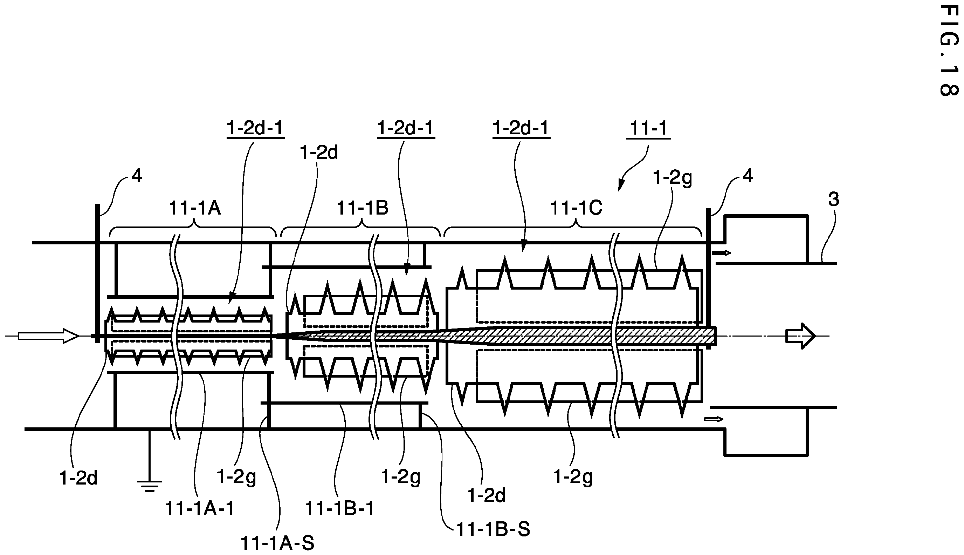

In the device of the twelfth example of the present invention depicted in Figure 18 to Figure 20, in the discharge electrode of the device of the eleventh example described above, a band-shaped straightening vane 1-2g is annexed between the saw-blade-shaped discharge electrode plates 1-2d in order to further improve collection efficiency of particles in exhaust gas. The structure is such that, as with the device of the eleventh example, the saw-blade-shaped discharge electrode plate 1-2d where the saw-blade-shaped discharge plate parts (crest parts) 1-2e of the tubular collecting unit 11-1 are provided integrally with the substrate unit 1-2f extending in the axial direction of the electrode rod 1-2a is provided to protrude from the electrode rod 1-2a via the substrate unit 1-2f and the band-shaped straightening vanes 1-2g each having a diameter smaller than the outer diameter of the saw-blade-shaped discharge electrode plate are radially disposed along an axial direction of the electrode rod 1-2a between the saw-blade-shaped discharge electrode plates 1-2d each in a circumferential direction. Thus-configured discharge electrode is adopted. That is, in the device of the present example, a discharge electrode is adopted, which is configured so that a plurality of saw-blade-shaped discharge electrode groups 1-2d-1 formed by disposing the saw-blade-shaped discharge plate parts 1-2e in the axial center direction of the electrode rod 1-2a with a desired space are radially disposed with a desired space in a circumferential direction of the electrode rod 1-2a and band-shaped straightening vanes 1-2g with a protrusion length whose diameter is smaller than the outer diameter (radial-direction protrusion length of the electrode rod 1-2a) of the saw-blade-shaped discharge electrode plate 1-2d are radially disposed between these saw-blade-shaped discharge electrode plates 1-2d along the axial direction of the electrode rod 1-2a. Note that a length (protrusion length) L of the band-shaped straightening vane 1-2g in a radial direction of the electrode rod 1-2a and a length in an axial direction, the number for annexing, a space with the saw-blade-shaped discharge electrode plate 1-2d, and so forth are appropriately set in accordance with discharge voltage, discharge current, a flow rate range of the exhaust gas flow, a circumferential-direction space at a tip of the saw-blade-shaped discharge plate part 1-2e, the collecting unit diameter of each of the small-diameter collecting unit 11-1A that is a tubular collecting module with a small diameter, the intermediate-diameter collecting unit 11-1B that is a tubular collecting module with an intermediate diameter, and the large-diameter collecting unit 11-1C that is a tubular collecting module with a large diameter, the outer diameter of the electrode rod 1-2a, and so forth.

In the case of the above-configured device of the twelfth example, with the band-shaped straightening vanes 1-2g having a diameter smaller than the outer diameter of the saw-blade-shaped discharge electrode plate 1-2d radially disposed between the saw-blade-shaped discharge electrode plates 1-2d in the circumferential direction along the axial direction of the electrode rod 1-2a, operations and effects similar to those of the device of the eleventh example described above, that is, operations and effects such as ensuring durability of the saw-blade-shaped discharge electrode plate 1-2d, an improvement in ensuring electric charge of particles by increasing effective field strength, and ensuring collection efficiency, and so forth allow the exhaust gas flow passing between the saw-blade-shaped discharge electrode plates 1-2d to positively abut to further attenuate kinetic energy included in the exhaust gas flow to further decrease the speed of the flow. Therefore, compared with the device of the eleventh example, the particles in the exhaust gas can be electrically charged more reliably to obtain large Coulomb force, thereby further improving collection efficiency.

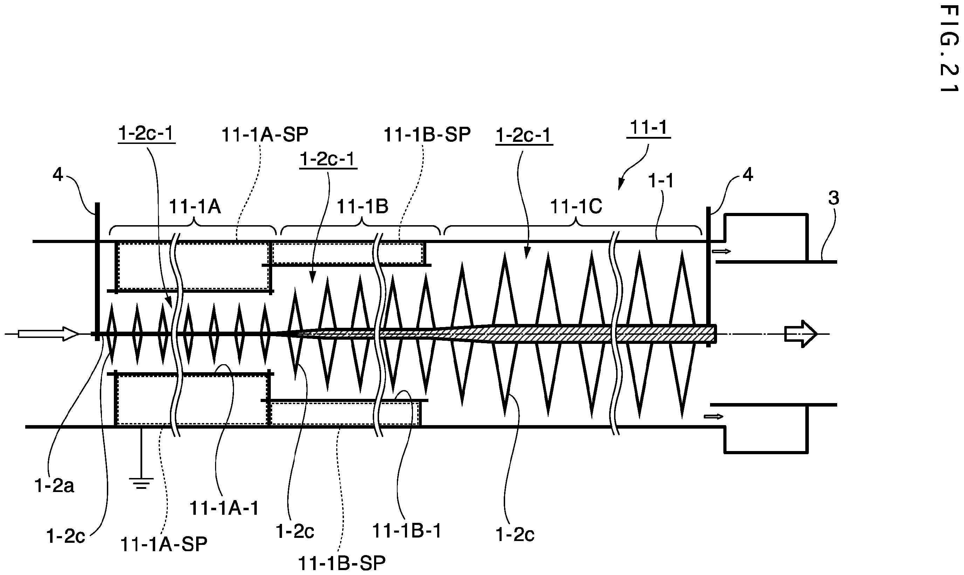

In the device of the thirteenth example of the present invention depicted in Figure 21 to Figure 22, in a small-diameter tubular collecting module at a first stage on the uppermost stream side and an intermediate-diameter tubular collecting module at a second stage in the tubular collecting unit 11-1, as a stay used to fix the small-diameter collecting pipe 11-1A-1 and the intermediate-diameter collecting pipe 11-1B-1 as precipitation electrodes in the main collecting pipe 1-1 with a predetermined length and a constant diameter, stays 11-1A-SP and 11-1B-SP each formed of a plate-shaped long member extending in a tube axial direction are adopted in place of the rod-shaped stay in the devices of the first to ninth examples described above. That is, the device of the present example is configured so that the small-diameter collecting pipe 11-1A-1 as a precipitation electrode of the small-diameter tubular collecting module at the first stage on the uppermost stream side is fixed to the main collecting pipe 1-1 with the wide-width plate-shaped stay 11-1A-SP formed of a long member, and further the intermediate-diameter collecting pipe 11-1B-1 as a precipitation electrode of the intermediate-diameter collecting module at the second stage is fixed to the main collecting pipe 1-1 with the plate-shaped stay 11-1B-SP with a width narrower than the wide-width stay 11-1A-SP at the first stage. Note that it goes without saying that the widths of the stays 11-1A-SP and 11-1B-SP in a radial direction is set in accordance with a space between the small-diameter collecting pipe 11-1A-1 and the intermediate-diameter collecting pipe 11-1B-1, and the main collecting pipe 1-1, respectively.

In the case of the above-configured device of the thirteenth example, with the stays fixing the small-diameter collecting pipe 11-1A-1 and the intermediate-diameter collecting pipe 11-1B-1 to the main collecting pipe 1-1 being the plate-shaped stays 11-1A-SP and 11-1B-SP made of a long member and extending in the tube axial direction, the swirl flow of the exhaust gas flowing between the collecting pipes can be caused to actively abut on these plate-shaped stays. With straightening operation of the stays as straightening vanes, as for flows between the small-diameter collecting pipe 11-1A-1 and the intermediate-diameter collecting pipe 11-1B-1 of the tubular collecting unit 11-1 and the main collecting pipe 1-1, a swirl flow of the exhaust gas is suppressed to increase a flow in the axial direction and thus the speed of the swirl flow decreases. In this state, the flow flows out into the large-diameter collecting pipe at the subsequent stage. In the collecting pipe at the subsequent stage, the flow is mixed into many flows in the axial direction decelerated in advance, particles are electrically charged reliably to obtain large Coulomb force, and collection efficiency can be further improved.

Note that while the devices of the first to thirteenth examples of the present invention have been described by taking the case of treating the entire exhaust gas amount as an example, when the present invention is used for an EGR system, it goes without saying that the exhaust gas treated in the device of the present invention may be branched and taken as EGR gas and the device of the present invention can be applied also to treatment of only an EGR gas flow branched from an entire exhaust gas flow. Also, when the present invention is used for an EGR system, with an EGR gas flow cleaned by a scrubber device to remove sulfur-derived products such as sulfur dioxides in exhaust gas, it is possible to prevent a problem of impairing durability of an engine and related components due to corrosion and abrasion of engine components such as a piston, piston ring, cylinder, cylinder head, intake/exhaust valve, and valve system and exhaust related components such as an exhaust pipe, muffler, economizer, and recuperator.

Note that examples using a tangential cyclone have been mainly described as preferable examples of a separating and collecting means for separating and collecting particulate matter detached from a precipitation electrode of a tubular collecting unit, but it goes without saying that a collision-type inertial-force particle separator may be also used.

### Reference Signs List

1 electric precipitation unit
1-1 main collecting pipe
1-1a exhaust gas inlet pipe
1-1b PM high-concentration exhaust gas delivery portion
1-1c, 3-1 seal-air inlet pipe
1-2 discharge electrode
1-2a electrode rod (main electrode)
1-2a-1, 1-2a-2 gradually-increased diameter unit
1-2b electrode probe
1-2c saw-blade-shaped discharge plate
1-2c-1 saw-blade-shaped discharge electrode group
1-2d saw-blade-shaped discharge electrode plate
1-2d-1 saw-blade-shaped discharge electrode group
1-2e saw-blade-shaped discharge plate part (crest part)
1-2f substrate unit
1-2g band-shaped straightening vane
2 separating and collecting means
2-1 cyclone collecting unit
2-1a tangential cyclone
2-2 reflux pipe
3 PM low-concentration exhaust gas delivery pipe
4 support body
5-1, 5-3 communicating pipe
5-2 PM high-concentration exhaust gas pipe
7 blower
8 dumper
11-1 tubular collecting unit
11-1A, 31-1A small-diameter collecting unit
11-1A-1, 31-1A-1 small-diameter collecting pipe
11-1A-2first-stage discharge electrode
11-1A-3discharge electrode
11-1A-4, 21-1A-4, 21-1A-5, 21-1B-4, 21-1B-5, 21-1C-4, 21-1D-4 electrode cylinder
11-1A-5, 11-1A-S, 11-1A-S1, 11-1B-S, 11-1A-SP, 11-1B-SP stay
11-1B, 31-1B intermediate-diameter collecting unit
11-1B-1, 31-1B-1 intermediate-diameter collecting pipe
11-1B-2second-stage discharge electrode
11-1C large-diameter collecting unit
11-1C-11arge-diameter collecting pipe
11-1C-2third-stage discharge electrode
12 mesh charging antipole
13 charge/discharge electrode
13-1 discharge electrode probe
21-1 tubular collecting unit
21-1A first collecting unit
21-1A-1first collecting pipe
21-1B second collecting unit
21-1B-1second collecting pipe
21-1C third collecting unit
21-1C-1third collecting pipe
21-1D fourth collecting unit
21-1D-1fourth collecting pipe
21-1E fifth collecting unit
21-1E-1fifth collecting pipe
21-1F sixth collecting unit
21-1F-1sixth collecting pipe
21-1A-2a, 21-1A-2b, 21-1B-2, 21-1C-2 collecting pipe
21-1A-3a, 21-1A-3b, 21-1B-3a, 21-1B-3b, 21-1C-3, 21-1D-3 discharge electrode
31 tubular collecting unit
31-1 main collecting pipe unit
31-2 first diameter-expanded collecting pipe unit
31-2A first diameter-expanded collecting unit
31-2A-1first diameter-expanded collecting pipe
31-3 second diameter-expanded collecting pipe unit
31-3A second diameter-expanded collecting unit
31-3A-1second diameter-expanded collecting pipe
41 tubular collecting unit
41-1 diameter-expanded collecting pipe
41-1A small-diameter collecting unit
41-1A-1small-diameter collecting pipe
41-1A-3, 41-1B-3 electrode cylinder
41-1B large-diameter collecting unit
41-1A-2, 41-1B-2 discharge electrode
41-1C intermediate-diameter collecting unit
41-1C-1intermediate-diameter collecting pipe
41-1D normal collecting unit
41-2 main collecting pipe unit
61-1, 61-2, 61-3 collecting pipe
61-1A, 61-2A, 61-3A bell mouth
61-1B, 61-2B, 61-3B tapered and diameter-enlarged portion
70 pipe main body
70-1 sub collecting pipe
70-2 conductive stay
70-3 electrode rod
70-4 discharge electrode
W1, W2 diameter transition part
H radial-direction protrusion length of a saw-blade-shaped discharge plate
H' radial-direction protrusion length of a saw-blade-shaped discharge electrode plate having a substrate unit
h radial-direction protrusion length of a saw-blade-shaped discharge plate part
T axial-direction width of a root part of the saw-blade-shaped discharge plate
T' axial-direction width of a root part of a saw-blade-shaped discharge plate part
t space between root parts of the discharge plates
t' space between root parts of the saw-blade-shaped discharge plate parts
L radial-direction length of a band-shaped straightening vane

## Claims

1. An exhaust gas treatment equipment for a marine diesel engine using fuel oil, the equipment comprising: an electric precipitation means (1) having a tubular collecting unit (11-1), the tubular collecting unit (11-1) including a combination of collecting modules, each having a discharge electrode (1-2) for charging particulate matter contained in exhaust gas of a diesel engine using fuel oil and a tubular precipitation electrode for collecting the particulate matter charged, the discharge electrode (1-2) having a main electrode (1-2a) disposed in the tubular collecting unit (11-1) in a tube axial direction and a plurality of electrodes arranged at intervals on the main electrode (1-2a) and projecting radially; a separating and collecting means (2) for separating, collecting and precipitating the particulate matter detached from the tubular collecting unit (11-1), separately from the electric precipitation means (1); an exhaust gas delivery pipe (3) for exhaust gases with a low concentration of particulate matter provided near an axial center of the tubular collecting unit (11-1) on a downstream side thereof; and an exhaust gas delivery portion (1-1b) for exhaust gases with a high concentration of particulate matter provided near an inner circumferential surface of the tubular collecting unit (11-1) on the downstream side thereof and connected to the separating and collecting means (2) for collecting and precipitating the particulate matter, **characterized in that** on a upstream side in the tubular collecting unit (11-1) including a main collecting pipe (1-1) that has the precipitation electrode and the discharge electrode (1-2) therein and has a predetermined length and a constant diameter, tubular collecting modules of said collecting modules are arranged in combination in the main collecting pipe (1-1) in the tube axial direction, each of the tubular collecting modules having the discharge electrode (1-2) with a different diameter arranged and the tubular precipitation electrode with a diameter smaller than the main collecting pipe (1-1), **in that** on the downstream in the tubular collecting unit (11-1), a collecting module of said collecting modules including the discharge electrode (1-2) and the main collecting pipe (1-1) is disposed, and **in that** in the tubular collecting unit (11-1), a tubular collecting module with a smallest diameter disposed on an exhaust gas upstream side and another tubular collecting module with a larger diameter sequentially disposed toward downstream.

2. The exhaust gas treatment equipment for the marine diesel engine using fuel oil according to claim 1, wherein
the discharge electrode (1-2) is disposed in a space between the main collecting pipe and the tubular collecting module to configure the tubular collecting module.

3. The exhaust gas treatment equipment for the marine diesel engine using fuel oil according to claim 1 or 2, wherein
a plurality of the tubular collecting modules having said discharge electrodes (1-2) and said precipitation electrodes are disposed in a space between the main collecting pipe and the tubular collecting modules.

4. The exhaust gas treatment equipment for a marine diesel engine using fuel oil according to any one of claims 1 to 3, wherein the main collecting pipe has a diameter-enlarged area.

5. The exhaust gas treatment equipment for a marine diesel engine using fuel oil according to any one of claims 1 to 4, wherein the main collecting pipe has sequentially-enlarged diameters toward a downstream side of exhaust gas.

6. The exhaust gas treatment equipment for the marine diesel engine using fuel oil according to any one of claims 1 to 5, wherein
when the equipment includes a tubular collecting module on an exhaust gas downstream side adjacent to a tubular collecting module on an exhaust gas upstream side and having a diameter larger than the tubular collecting module on the exhaust gas upstream side, a discharge electrode (1-2) of the tubular collecting module on the exhaust gas downstream side has an arranged outer diameter equal to or smaller than an inner diameter of a precipitation electrode of the tubular collecting module on the exhaust gas upstream side.

7. The exhaust gas treatment equipment for the marine diesel engine using fuel oil according to any one of claims 1 to 5, wherein
when the equipment includes a tubular collecting module on an exhaust gas downstream side adjacent to a tubular collecting module on an exhaust gas upstream side and having a diameter larger than the tubular collecting module on the exhaust gas upstream side and a discharge electrode of the tubular collecting module on the exhaust gas downstream side has an arranged outer diameter equal to or smaller than an inner diameter of a precipitation electrode of the tubular collecting module on the exhaust gas upstream side, a diameter transition part where the arranged outer diameter of the discharge electrode sequentially enlarges is provided between the discharge electrodes of the tubular collecting modules on the exhaust gas upstream side and on the exhaust gas downstream side.

8. The exhaust gas treatment equipment for the marine diesel engine using fuel oil according to any one of claims 1 to 7, wherein
a recirculation pipe for causing purified gas after passing through the separating and collecting means to reflux is provided between the diesel engine and the tubular collecting unit, and kinetic energy imparting means to the exhaust gas refluxing in the recirculation pipe is provided.

9. The exhaust gas treatment equipment for the marine diesel engine using fuel oil according to any one of claims 1 to 8, wherein
a bell mouth is provided at an upstream end of a collecting pipe that corresponds to the tubular precipitation electrode of each of the tubular collecting modules disposed in the main collecting pipe, and a tapered and diameter-enlarged portion is provided at a downstream end of the collecting pipe.

10. The exhaust gas treatment equipment for the marine diesel engine using fuel oil according to any one of claims 1 to 9, wherein
a cylindrical sub collecting pipe with many through holes is provided to an inner wall of the collecting pipe that corresponds to the tubular precipitation electrode of each of the tubular collecting modules disposed in the main collecting pipe, in a state of being electrically conductive with the collecting pipe.

11. The exhaust gas treatment equipment for the marine diesel engine using fuel oil according to any one of claims 1 to 10, wherein
many through holes are provided to a wall of the collecting pipe that corresponds to the tubular precipitation electrode of each of the tubular collecting modules disposed in the main collecting pipe.

12. The exhaust gas treatment equipment for the marine diesel engine using fuel oil according to any one of claims 1 to 11, wherein
the discharge electrode includes the main electrode disposed in the tubular collecting unit in the tube axial direction and saw-blade-shaped discharge plates disposed at intervals on the main electrode, the saw-blade-shaped discharge plates are disposed with a desired space in an axial direction of the main electrode to configure a saw-blade-shaped discharge electrode group, and a plurality of said saw-blade-shaped discharge electrode groups are radially disposed in a circumferential direction of the main electrode.

13. The exhaust gas treatment equipment for the marine diesel engine using fuel oil according to any one of claims 1 to 11, wherein
the discharge electrode includes a saw-blade-shaped discharge electrode plate in which a saw-blade-shaped discharge plate part is integrally provided with a substrate unit extending in an axial direction of the main electrode, the saw-blade-shaped discharge electrode plate is provided to protrude along an axial direction of the main electrode to protrude via the substrate unit, and a plurality of said saw-blade-shaped discharge electrode plates are radially disposed in the circumferential direction of the main electrode.

14. The exhaust gas treatment equipment for the marine diesel engine using fuel oil according to claim 12 or 13, wherein
between the saw-blade-shaped discharge electrode groups or the saw-blade-shaped discharge electrode plates disposed in the axial direction and the circumferential direction of the main electrode, at least one band-shaped straightening vane having a diameter smaller than an arranged outer diameter of the saw-blade-shaped discharge electrode groups or the saw-blade-shaped discharge electrode plate is radially disposed along an axial direction of the main electrode.

15. The exhaust gas treatment equipment for the marine diesel engine using fuel oil according to any one of claims 1 to 14, wherein
a stay that fixes the tubular collecting unit of each of the tubular collecting modules disposed in the main collecting pipe to a main collecting pipe is a plate-shaped long member extending in the tube axial direction, and a plurality of said plate-shaped stays formed of the long member are arranged in a circumferential direction.

## Patentansprüche

1. Abgasbehandlungsausstattung für einen Schiffsdieselmotor mit Heizöl, die Ausstattung umfassend: ein elektrisches Abscheidungsmittel (1) mit einer röhrenförmigen Sammeleinheit (11-1), wobei die röhrenförmige Sammeleinheit (11-1) eine Kombination von Sammelmodulen enthält, das jedes eine Entladungselektrode (1-2) zum Laden von Partikeln, die in Abgas eines Dieselmotors mit Heizöl enthalten sind, und eine röhrenförmige Abscheideelektrode zum Sammeln der geladenen Partikel aufweist, wobei die Entladungselektrode (1-2) eine Hauptelektrode (1-2a), die in der röhrenförmigen Sammeleinheit (11-1) in einer axialen Röhrenrichtung angeordnet ist, und mehrere Elektroden aufweist, die in Intervallen auf der Hauptelektrode (1-2a) angeordnet sind und radial vorstehen; ein Trenn- und Sammelmittel (2) zum Trennen, Sammeln und Abscheiden der Partikel, abgesondert von der röhrenförmigen Sammeleinheit (11-1), separat zum elektrischen Abscheidungsmittel (1); ein Abgasförderrohr (3) für Abgase mit einer niedrigen Konzentration von Partikeln, das nahe einer axialen Mitte der röhrenförmigen Sammeleinheit (11-1) auf einer stromabwärtigen Seite davon vorgesehen ist; und einen Abgasförderabschnitt (1-1b) für Abgase mit einer hohen Konzentration von Partikeln, der nahe einer Innenumfangsfläche der röhrenförmigen Sammeleinheit (11-1) auf der stromabwärtigen Seite davon vorgesehen und mit dem Trenn- und Sammelmittel (2) zum Sammeln und Abscheiden der Partikel verbunden ist, **dadurch gekennzeichnet, dass** auf einer stromaufwärtigen Seite in der röhrenförmigen Sammeleinheit (11-1), die ein Hauptsammelrohr (1-1) enthält, das die Abscheideelektrode und die Entladungselektrode (1-2) darin aufweist und eine vorgegebene Länge und einen konstanten Durchmesser aufweist, röhrenförmige Sammelmodule der Sammelmodule in Kombination im Hauptsammelrohr (1-1) in der axialen Röhrenrichtung angeordnet sind, wobei jedes der röhrenförmigen Sammelmodule die Entladungselektrode (1-2) mit einem unterschiedlichen Durchmesser angeordnet aufweist und die röhrenförmige Abscheideelektrode mit einem Durchmesser, der kleiner als das Hauptsammelrohr (1-1) ist, aufweist, dass auf der stromabwärtigen Seite in der röhrenförmigen Sammeleinheit (11-1) ein Sammelmodul der Sammelmodule mit der Entladungselektrode (1-2) und dem Hauptsammelrohr (11-1) angeordnet ist, und dass in der röhrenförmigen Sammeleinheit (11-1) ein röhrenförmiges Sammelmodul mit einem kleinsten Durchmesser auf einer abgasstromaufwärtigen Seite angeordnet ist und ein weiteres röhrenförmiges Sammelmodul mit einem größeren Durchmesser sequentiell in der stromabwärtigen Richtung angeordnet ist.

2. Abgasbehandlungsausstattung für den Schiffsdieselmotor mit Heizöl nach Anspruch 1, wobei
die Entladungselektrode (1-2) in einem Raum zwischen dem Hauptsammelrohr und dem röhrenförmigen Sammelmodul zum Konfigurieren des röhrenförmigen Sammelmoduls angeordnet ist.

3. Abgasbehandlungsausstattung für den Schiffsdieselmotor mit Heizöl nach Anspruch 1 oder 2, wobei
mehrere der röhrenförmigen Sammelmodule mit den Entladungselektroden (1-2) und den Abscheideelektroden in einem Raum zwischen dem Hauptsammelrohr und den röhrenförmigen Sammelmodulen angeordnet sind.

4. Abgasbehandlungsausstattung für den Schiffsdieselmotor mit Heizöl nach einem der Ansprüche 1 bis 3, wobei das Hauptsammelrohr einen im Durchmesser vergrößerten Bereich aufweist.

5. Abgasbehandlungsausstattung für den Schiffsdieselmotor mit Heizöl nach einem der Ansprüche 1 bis 4, wobei das Hauptsammelrohr sequentiell vergrößerte Durchmesser zu einer stromabwärtigen Seite von Abgas hin aufweist.

6. Abgasbehandlungsausstattung für den Schiffsdieselmotor mit Heizöl nach einem der Ansprüche 1 bis 5, wobei,
wenn die Ausstattung ein röhrenförmiges Sammelmodul auf einer abgasstromabwärtigen Seite enthält, das einem röhrenförmigen Sammelmodul auf einer abgasstromaufwärtigen Seite benachbart ist und einen Durchmesser aufweist, der größer als das röhrenförmige Sammelmodul auf der abgasstromaufwärtigen Seite ist, eine Entladungselektrode (1-2) des röhrenförmigen Sammelmoduls auf der abgasstromabwärtigen Seite einen angeordneten Außendurchmesser aufweist, der gleich einem oder kleiner als ein Innendurchmesser einer Abscheideelektrode des röhrenförmigen Sammelmoduls auf der abgasstromaufwärtigen Seite ist.

7. Abgasbehandlungsausstattung für den Schiffsdieselmotor mit Heizöl nach einem der Ansprüche 1 bis 5, wobei,
wenn die Ausstattung ein röhrenförmiges Sammelmodul auf einer abgasstromabwärtigen Seite enthält, das einem röhrenförmigen Sammelmodul auf einer abgasstromaufwärtigen Seite benachbart ist und einen Durchmesser aufweist, der größer als das röhrenförmige Sammelmodul auf der abgasstromaufwärtigen Seite ist, und eine Entladungselektrode des röhrenförmigen Sammelmoduls auf der abgasstromabwärtigen Seite einen angeordneten Außendurchmesser aufweist, der gleich einem oder kleiner als ein Innendurchmesser einer Abscheideelektrode des röhrenförmigen Sammelmoduls auf der abgasstromaufwärtigen Seite ist, ein Durchmesserübergangsteil, wo sich der angeordnete Außendurchmesser der Entladungselektrode sequentiell vergrößert, zwischen den Entladungselektroden der röhrenförmigen Sammelmodule auf der abgasstromaufwärtigen Seite und auf der abgasstromabwärtigen Seite vorgesehen ist.

8. Abgasbehandlungsausstattung für den Schiffsdieselmotor mit Heizöl nach einem der Ansprüche 1 bis 7, wobei
ein Rückführrohr zum Bewirken, dass gereinigtes Gas nach dem Durchlaufen des Trenn- und Sammelmittels zurückströmt, zwischen dem Dieselmotor und der röhrenförmigen Sammeleinheit vorgesehen ist, und ein kinetisches Energievermittlungsmittel für das Abgas, das im Rückführrohr zurückströmt, vorgesehen ist.

9. Abgasbehandlungsausstattung für den Schiffsdieselmotor mit Heizöl nach einem der Ansprüche 1 bis 8, wobei
eine Aufweitung an einem stromaufwärtigen Ende eines Sammelrohrs vorgesehen ist, das der röhrenförmigen Abscheideelektrode von jedem der röhrenförmigen Sammelmodule entspricht, die im Hauptsammelrohr angeordnet sind, und ein sich verjüngender und im Durchmesser vergrößerter Abschnitt an einem stromabwärtigen Ende des Sammelrohrs vorgesehen ist.

10. Abgasbehandlungsausstattung für den Schiffsdieselmotor mit Heizöl nach einem der Ansprüche 1 bis 9, wobei
ein zylindrisches Teilsammelrohr mit zahlreichen Durchgangslöchern an einer Innenwand des Sammelrohrs vorgesehen ist, das der röhrenförmigen Abscheideelektrode von jedem der röhrenförmigen Sammelmodule entspricht, die im Hauptsammelrohr angeordnet sind, in einem Zustand der elektrischen Leitfähigkeit mit dem Sammelrohr.

11. Abgasbehandlungsausstattung für den Schiffsdieselmotor mit Heizöl nach einem der Ansprüche 1 bis 10, wobei
zahlreiche Durchgangslöcher an einer Wand des Sammelrohrs vorgesehen sind, das der röhrenförmigen Abscheideelektrode von jedem der röhrenförmigen Sammelmodule entspricht, die im Hauptsammelrohr angeordnet sind.

12. Abgasbehandlungsausstattung für den Schiffsdieselmotor mit Heizöl nach einem der Ansprüche 1 bis 11, wobei
die Entladungselektrode die Hauptelektrode, die in der röhrenförmigen Sammeleinheit in der axialen Röhrenrichtung angeordnet ist, und sägeblattförmige Entladungsplatten enthält, die in Intervallen auf der Hauptelektrode angeordnet sind, wobei die sägeblattförmigen Entladungsplatten mit einem gewünschten Raum in einer axialen Richtung der Hauptelektrode zum Konfigurieren einer sägeblattförmigen Entladungselektrodengruppe angeordnet sind, und wobei mehrere der sägeblattförmigen Entladungselektrodengruppen radial in einer Umfangsrichtung der Hauptelektrode angeordnet sind.

13. Abgasbehandlungsausstattung für den Schiffsdieselmotor mit Heizöl nach einem der Ansprüche 1 bis 11, wobei
die Entladungselektrode eine sägeblattförmige Entladungsplatte enthält, in der ein sägeblattförmiges Entladungsplattenteil einstückig mit einer Substrateinheit vorgesehen ist, die in einer axialen Richtung der Hauptelektrode verläuft, wobei die sägeblattförmige Entladungselektrodenplatte zum Vorstehen entlang einer axialen Richtung der Hauptelektrode zum Vorstehen über die Substrateinheit vorgesehen ist, und wobei mehrere der sägeblattförmigen Entladungselektrodengruppen radial in der Umfangsrichtung der Hauptelektrode angeordnet sind.

14. Abgasbehandlungsausstattung für den Schiffsdieselmotor mit Heizöl nach Anspruch 12 oder 13, wobei
zwischen den sägeblattförmigen Entladungselektrodengruppen oder den sägeblattförmigen Entladungselektrodenplatten, die in der axialen Richtung und der Umfangsrichtung der Hauptelektrode angeordnet sind, zumindest eine bandförmige Richtleitschaufel mit einem Durchmesser, der kleiner als ein angeordneter Außendurchmesser der sägeblattförmigen Entladungselektrodengruppen oder der sägeblattförmigen Entladungselektrodenplatte ist, radial entlang einer axialen Richtung der Hauptelektrode angeordnet ist.

15. Abgasbehandlungsausstattung für den Schiffsdieselmotor mit Heizöl nach einem der Ansprüche 1 bis 14, wobei
eine Abstützung, die die röhrenförmige Sammeleinheit von jedem der röhrenförmigen Sammelmodule, welche im Hauptsammelrohr angeordnet sind, an einem Hauptsammelrohr befestigt, ein plattenförmiges, langes Glied ist, das in der axialen Röhrenrichtung verläuft, und wobei mehrere der plattenförmigen Abstützungen, die aus dem langen Glied ausgebildet sind, in einer Umfangsrichtung angeordnet sind.

## Revendications

1. Dispositif de traitement de gaz d'échappement pour un moteur diesel de navire utilisant du mazout, le dispositif comprenant : un moyen de précipitation électrique (1) comportant une unité de collecte tubulaire (11-1), l'unité de collecte tubulaire (11-1) comprenant une combinaison de modules de collecte comportant respectivement une électrode de décharge (1-2) destinée à charger des matières particulaires contenues dans un gaz d'échappement d'un moteur diesel utilisant du mazout et une électrode de précipitation tubulaire destinée à collecter les matières particulaires chargées, l'électrode de décharge (1-2) comportant une électrode principale (1-2a) disposée dans l'unité de collecte tubulaire (11-1) dans une direction axiale de tube et une pluralité d'électrodes disposées à des intervalles sur l'électrode principale (1-2a) et faisant saillie radialement ; un moyen de séparation et de collecte (2) destiné à séparer, collecter et précipiter les matières particulaires détachées de l'unité de collecte tubulaire (11-1), séparément du moyen de précipitation électrique (1) ; un tuyau de distribution de gaz d'échappement (3) pour des gaz d'échappement avec une faible concentration de matières particulaires, installé à proximité d'un centre coaxial de l'unité de collecte tubulaire (11-1) sur un côté aval de celui-ci ; et une partie de distribution de gaz d'échappement (1-1b) pour des gaz d'échappement avec une concentration élevée de matières particulaires, installé à proximité d'une surface circonférentielle intérieure de l'unité de collecte tubulaire (11-1) sur le côté aval de celle-ci et reliée au moyen de séparation et de collecte (2) pour la collecte et la précipitation des matières particulaires, **caractérisé en ce que** sur un côté amont dans l'unité de collecte tubulaire (11-1) comprenant un tuyau de collecte principal (1-1) comportant l'électrode de précipitation et l'électrode de décharge (1-2) et présentant une longueur prédéterminée et un diamètre constant, des modules de collecte tubulaires desdits modules de collecte sont disposés en combinaison dans le tuyau de collecte principal (1-1) dans la direction axiale de tube, chaque des modules de collecte tubulaires comportant l'électrode de décharge (1-2) avec un diamètre différent et l'électrode de précipitation tubulaire avec un diamètre inférieur à celui du tuyau de collecte principal (1-1), **en ce qu'**un module de collecte parmi lesdits modules de collecte comprenant l'électrode de décharge (1-2) et le tuyau de collecte principal (1-1) est disposé sur le côté aval dans l'unité de collecte tubulaire (11-1), et **en ce que** dans l'unité de collecte tubulaire (11-1), un module de collecte tubulaire avec un diamètre le plus petit est disposé sur un côté amont de gaz d'échappement et un autre module de collecte tubulaire avec un diamètre plus grand est disposé séquentiellement vers l'aval.

2. Dispositif de traitement de gaz d'échappement pour le moteur diesel de navire utilisant du mazout selon la revendication 1, dans lequel l'électrode de décharge (1-2) est disposée dans un espace entre le tuyau de collecte principal et le module de collecte tubulaire pour configurer le module de collecte tubulaire.

3. Dispositif de traitement de gaz d'échappement pour le moteur diesel de navire utilisant du mazout selon la revendication 1 ou 2, dans lequel
une pluralité de modules de collecte tubulaires comportant lesdites électrodes de décharge (1-2) et lesdites électrodes de précipitation sont disposés dans un espace entre le tuyau de collecte principal et les modules de collecte tubulaires.

4. Dispositif de traitement de gaz d'échappement pour un moteur diesel de navire utilisant du mazout selon l'une quelconque des revendications 1 à 3, dans lequel le tuyau de collecte principal comporte une zone à diamètre agrandi.

5. Dispositif de traitement de gaz d'échappement pour un moteur diesel de navire utilisant du mazout selon l'une quelconque des revendications 1 à 4, dans lequel le tuyau de collecte principal présente des diamètres élargis séquentiellement vers un côté aval de gaz d'échappement.

6. Dispositif de traitement de gaz d'échappement pour un moteur diesel de navire utilisant du mazout selon l'une quelconque des revendications 1 à 5, dans lequel
lorsque le dispositif comprend un module de collecte tubulaire sur un côté aval de gaz d'échappement adjacent à un module de collecte tubulaire sur un côté amont de gaz d'échappement et présentant un diamètre supérieur à celui du module de collecte tubulaire sur le côté amont de gaz d'échappement, une électrode de décharge (1-2) du module de collecte tubulaire sur le côté aval de gaz d'échappement présente un diamètre extérieur égal ou inférieur à un diamètre intérieur d'une électrode de précipitation du module de collecte tubulaire sur le côté amont de gaz d'échappement.

7. Dispositif de traitement de gaz d'échappement pour un moteur diesel de navire utilisant du mazout selon l'une quelconque des revendications 1 à 5, dans lequel
lorsque le dispositif comprend un module de collecte tubulaire sur un côté aval de gaz d'échappement adjacent à un module de collecte tubulaire sur un côté amont de gaz d'échappement et présentant un diamètre supérieur à celui du module de collecte tubulaire sur le côté amont de gaz d'échappement et lorsqu'une électrode de décharge du module de collecte tubulaire sur le côté aval de gaz d'échappement présente un diamètre extérieur égal ou inférieur à un diamètre intérieur d'une électrode de précipitation du module de collecte tubulaire sur le côté amont de gaz d'échappement, une partie de transition de diamètre où le diamètre extérieur de l'électrode de décharge s'agrandit séquentiellement est prévue entre les électrodes de décharge du module de collecte tubulaire sur le côté amont de gaz d'échappement et sur le côté aval de gaz d'échappement.

8. Dispositif de traitement de gaz d'échappement pour un moteur diesel de navire utilisant du mazout selon l'une quelconque des revendications 1 à 7, dans lequel
un tuyau de recyclage destiné à faire refluer du gaz purifié après le passage de celui-ci à travers le moyen de séparation et de collecte est prévu entre le moteur diesel et l'unité de collecte tubulaire, et il est prévu un moyen d'application d'énergie cinétique pour le gaz d'échappement refluant dans le tuyau de recyclage.

9. Dispositif de traitement de gaz d'échappement pour un moteur diesel de navire utilisant du mazout selon l'une quelconque des revendications 1 à 8, dans lequel
une ouverture évasée est prévue à une extrémité amont d'un tuyau de collecte correspondant à l'électrode de précipitation tubulaire de chacun des modules de collecte tubulaires disposés dans le tuyau de collecte principal, et une partie conique à diamètre agrandi est prévue à une extrémité aval du tuyau de collecte.

10. Dispositif de traitement de gaz d'échappement pour un moteur diesel de navire utilisant du mazout selon l'une quelconque des revendications 1 à 9, dans lequel
un tuyau de collecte secondaire cylindrique avec de nombreux trous de passage est prévu au niveau d'une paroi intérieure du tuyau de collecte correspondant à l'électrode de précipitation tubulaire de chacun des modules de collecte tubulaires disposés dans le tuyau de collecte principal, dans un état électriquement conducteur avec le tuyau de collecte.

11. Dispositif de traitement de gaz d'échappement pour un moteur diesel de navire utilisant du mazout selon l'une quelconque des revendications 1 à 10, dans lequel
de nombreux trous de passage sont prévus dans une paroi du tuyau de collecte correspondant à l'électrodes de précipitation tubulaire de chacun des modules de collecte tubulaires disposés dans le tuyau de collecte principal.

12. Dispositif de traitement de gaz d'échappement pour un moteur diesel de navire utilisant du mazout selon l'une quelconque des revendications 1 à 11, dans lequel
l'électrode de décharge comprend l'électrode principale disposée dans l'unité de collecte tubulaire dans la direction axiale de tube et des plaques de décharge en forme de lame de scie disposées à des intervalles sur l'électrode principale, les plaques de décharge en forme de lame de scie sont placées avec un espace souhaité dans une direction axiale de l'électrode principale pour configurer un groupe d'électrodes de décharge en forme de lame de scie, et une pluralité desdits groupes d'électrodes de décharge en forme de lame de scie sont disposés radialement dans une direction circonférentielle de l'électrode principale.

13. Dispositif de traitement de gaz d'échappement pour le moteur diesel de navire utilisant du mazout selon l'une quelconque des revendications 1 à 11, dans lequel
l'électrode de décharge comprend une plaque d'électrode de décharge en forme de lame de scie, dans laquelle une partie de plaque d'électrode de décharge en forme de lame de scie est conçue intégralement avec une unité de substrat s'étendant dans une direction axiale de l'électrode principale, la plaque d'électrode de décharge en forme de lame de scie est conçue de manière à faire saillie le long d'une direction axiale de l'électrode principale pour faire saillie par le biais de l'unité de substrat, et une pluralité desdites plaques d'électrode de décharge en forme de lame de scie sont disposées radialement dans la direction circonférentielle de l'électrode principale.

14. Dispositif de traitement de gaz d'échappement pour le moteur diesel de navire utilisant du mazout selon la revendication 12 ou 13, dans lequel
entre les groupes d'électrodes de décharge en forme de lame de scie ou les plaques d'électrode de décharge en forme de lame de scie, disposés dans la direction axiale et la direction circonférentielle de l'électrode principale, au moins une aube de redressement en forme de bande présentant un diamètre inférieur à un diamètre extérieur des groupes d'électrodes de décharge en forme de lame de scie ou de la plaque d'électrode de décharge en forme de lame de scie est disposée radialement le long d'une direction axiale de l'électrode principale.

15. Dispositif de traitement de gaz d'échappement pour le moteur diesel de navire utilisant du mazout selon l'une quelconque des revendications 1 à 14, dans lequel
un étai destiné à fixer l'unité de collecte tubulaire de chacun des modules de collecte tubulaires disposés dans le tuyau de collecte principal sur un tuyau de collecte principal est un élément long en forme de plaque s'étendant dans la direction axiale de tube, et une pluralité desdites étais en forme de plaque constitués de l'élément long sont disposés dans une direction circonférentielle.
